(19) Europäisches Patentamt
European Patent Office
Office européen des brevets

(11) **EP 1 812 272 B1**

(12) **EUROPÄISCHE PATENTSCHRIFT**

(45) Veröffentlichungstag und Bekanntmachung des Hinweises auf die Patenterteilung:
**30.04.2008  Patentblatt 2008/18**

(21) Anmeldenummer: **05816538.2**

(22) Anmeldetag: **10.11.2005**

(51) Int Cl.:
*B60W 30/06* (2006.01)     *B60W 10/06* (2006.01)
*B60W 10/18* (2006.01)     *B60W 10/20* (2006.01)

(86) Internationale Anmeldenummer:
**PCT/DE2005/002023**

(87) Internationale Veröffentlichungsnummer:
**WO 2006/050710 (18.05.2006 Gazette 2006/20)**

(54) **VERFAHREN ZUR AUTOMATISCHEN STEUERUNG UND/ODER REGELUNG EINER BEWEGUNG EINES FAHRZEUGS WÄHREND EINES EINPARKVORGANGS UND AUTOMATISCHES EINPARKSYSTEM**

METHOD FOR AUTOMATICALLY CONTROLLING AND/OR REGULATING A MOTION OF A VEHICLE DURING A PARKING PROCESS, AND AUTOMATIC PARKING SYSTEM

PROCEDE DE COMMANDE ET/OU DE REGULATION AUTOMATIQUE DU MOUVEMENT D'UN VEHICULE AU COURS D'UNE MANOEUVRE POUR GARER LE VEHICULE ET SYSTEME AUTOMATIQUE POUR GARER UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.11.2004  DE 102004054437**

(43) Veröffentlichungstag der Anmeldung:
**01.08.2007  Patentblatt 2007/31**

(73) Patentinhaber: **Volkswagen Aktiengesellschaft 38436 Wolfsburg (DE)**

(72) Erfinder: **WINNER, Hermann 76467 Bietigheim (DE)**

(74) Vertreter: **Weber-Bruls, Dorothée Forrester & Boehmert, Pettenkoferstrasse 20-22 80336 München (DE)**

(56) Entgegenhaltungen:
**WO-A-20/04007232     DE-A1- 10 220 426
DE-A1- 10 238 525     FR-A- 2 785 383
US-A- 5 742 141     US-A1- 2003 182 038**

• **PATENT ABSTRACTS OF JAPAN Bd. 2000, Nr. 22, 9. März 2001 (2001-03-09) & JP 2001 138941 A (HONDA MOTOR CO LTD), 22. Mai 2001 (2001-05-22) in der Anmeldung erwähnt**

**Beschreibung**

Die Erfindung betrifft ein Verfahren zur automatischen Steuerung und/oder Regelung einer Bewegung eines Fahrzeugs während eines Einparkvorgangs mittels eines Einparksystems, umfassend zumindest eine Steuer- und/oder Regeleinrichtung, wobei das Verfahren die folgenden Schritte umfaßt:

- Festlegen einer Soll-Strecke, der von dem Fahrzeug während eines Einparkvorganges gefolgt werden soll;
- Berechnen mittels der Steuer- und/oder Regeleinrichtung von zumindest einem Sollwert eines Längsbewegungsparameters in Abhängigkeit von zumindest einem Querbewegungsparameter und einer Position des Fahrzeugs entlang der Soll-Strecke, wobei der Längsbewegungsparameter eine Bewegungsgröße des Fahrzeugs im Wesentlichen entlang der Soll-Strecke und der Querbewegungsparameter eine Bewegungsgröße des Fahrzeugs zumindest teilweise in eine Richtung senkrecht zu der Soll-Strecke beschreibt; und
- Vollautomatisches Steuern und/oder Regeln des Längsbewegungsparameters in Abhängigkeit von dem berechneten Sollwert des Längsbewegungsparameters mittels der Steuer- und/oder Regeleinrichtung; sowie ein automatisches Einparksystem.

Mit einem automatischen Einparksystem soll ein einfaches und sicheres Einparken eines Fahrzeugs ermöglicht werden, insbesondere sollen reproduzierbar schnelle und im wesentlichen von Störeinflüssen, wie der menschlichen motorischen Ungenauigkeit bzw. Trägheit, und von Störeinflüssen aufgrund der, insbesondere im Bezug auf eine Steuerungsprä-, zision, unzureichenden Schnittstelle zwischen dem Fahrer und dem Fahrzeug, unabhängige Einparkvorgänge ermöglicht werden.

So ist aus der US 5,742,141 ein semiautomatisches Parksystem für ein Fahrzeug bekannt, bei dem kontinuierlich ein Sollweg berechnet wird, um zu einer endgültigen Parkposition zu gelangen. Einem Fahrer des Fahrzeugs werden über Veränderungen der aufzuwendenden Lenkkraft Anweisungen zur Betätigung des Lenkrades gegeben, um das Fahrzeug auf den gewünschten Sollweg zu lenken. Dabei soll insbesondere die aufzuwendende Lenkkraft erhöht werden, wenn der Fahrer in eine vom Sollweg abkommende Richtung lenken möchte, und verringert werden, wenn der Fahrer so lenkt, daß das Fahrzeug auf dem Sollweg bleibt. Mit diesem System bleibt jedoch der wesentliche Störeinfluß eines Fehlsteuerns durch den Fahrer erhalten.

Die US 2003/0182038 A1 offenbart ein Parkassistenzsystem, bei dem eine Steuerwinkelgeschwindigkeit in Abhängigkeit von einem Steuerwinkel und einer Fahrzeuggeschwindigkeit verändert wird, so daß eine Kurvenrate, d.h. der Kehrwert eines Kurvenradius, ein lineares Verhältnis zur Bewegungsentfernung hat. Dies soll Berechnungen einer automatischen Regeleinrichtung erheblich vereinfachen. Eine Steuerung der Fahrzeuggeschwindigkeit neben der Steuerwinkelgeschwindigkeit wird nicht offenbart.

Aus der US 5,661,650 ist ein System bekannt, um die Geschwindigkeit eines Fahrzeuges während eines Normalfahrbetriebszustandes in Abhängigkeit von der Straßenform zu regeln. Bei diesem System wird insbesondere die Geschwindigkeit des Fahrzeuges vernngert, um das Fahrzeug sicher durch eine Kurve zu bringen. Dazu werden insbesondere Karteninformationen ausgelesen, um daraus spezielle Informationen über den Straßenverlauf zu ermitteln, um anschließend eine Soll-Fahrzeuggeschwindigkeit zu ermitteln, ohne daß dieses System zur Assistenz oder zur Durchführung eines Einparkvorganges eingesetzt wird.

Aus der JP 2001 138 941 A ist ein System zum automatischen Parken bekannt, bei dem eine Fahrgeschwindigkeit, die von dem Fahrer vorgegeben wird, in Abhängigkeit von einer durch einen Antrieb zur Beeinflussung der Lenkung eines Kraftfahrzeugs konstruktiv vorgegebenen maximalen Lenkradgeschwindigkeit begrenzt wird. Dabei wird eine Soll-Strecke im voraus gespeichert. Durch die Begrenzung der Fahrgeschwindigkeit soll ein starkes Abweichen von der Soll-Strecke verhindert werden, was sich dadurch ergeben könnte, daß der Lenkantrieb nicht den gewünschten Lenkwinkel einstellen kann, wenn die Fahrgeschwindigkeit durch den Fahrer zu hoch gewählt wird. Auch dieses System steht somit unter dem deutlichen Störeinfluß durch den Fahrer, daß dieser in den Einparkvorgang durch die notwendige Vorgabe der Fahrzeuggeschwindigkeit eingreift bzw. den Ablauf des Einparkvorgangs bestimmt.

Aus der DE 102 20 426 A1 , als nächstliegenden der Stand der Tecknik betrachtet, ist ein gattungsgemäßes Verfahren zum Betreiben eines Parkhilfesystems bekannt, bei dem ein automatisches Abbremsen und/oder Beschleunigung eines Fahrzeuges während eines Ein- und/oder Ausparkablaufes gesteuert wird. Dabei handelt es sich um ein semiautomatisches Parkhilfesystem bei dem einem Fahrer ein Lenkradeinschlag vorgegeben wird, den der Fahrer einstellen muß. Proportional zu einer Differenz zwischen dem vorgegebene Lenkradeinschlag und einem von dem Fahrer eingestellten Lenkeinschlag wird dann durch das Parkhilfesystem eine Bremskraft gesteuert und so die Geschwindigkeit des Fahrzeugs angepaßt.

Ferner wird in der WO 2004/007232 A1 ein Verfahren zur Unterstützung eines Fahrers eines Fahrzeugs bei einem Fahrmanöver, wie einem Park- oder Rangiermanöver, offenbart, bei dem eine Referenztrajektorie bestimmt wird, entlang der das Fahrzeug bewegt werden soll. Dem Fahrer wird während des Fahrmanövers eine einzustellende, das Fahrzeug entlang der Referenztraktorie steuernde Lenkradstellung angegeben. Die Fahrzeuglängsgeschwindigkeit wird bei einer Lenkwinkelabweichung zwischen dem von dem Fahrer tatsächlich eingestellten Ist-Lenkwinkel und dem in der angeforderten Lenkradeinstellung entsprechen Soll-Lenkwinkel fahrerunabhängig beeinflußt. Dem Fahrer soll dadurch eine größere Reaktionszeit zur Verfügung gestellt werden, um die angegebene Lenkradsteuerung einzustellen.

Somit weisen die bekannten Einparkverfahren bzw. Einparksysteme den Nachteil auf, daß der Einparkvorgang durch Störeinflüsse, insbesondere menschlicher Natur, beeinflußt wird und somit eine hohe Reproduzierbarkeit, insbesondere bei der Geschwindigkeit und der Genauigkeit des Einparkvorganges, nicht erzielt werden kann. Ferner können bei den bekannten Systemen, beispielsweise bei einer großen Längsgeschwindigkeit, überraschende und schnelle Änderungen eines Querbewegungsparameters, wie einem Lenkwinkel auftreten, die einen Fahrer unter Umständen verletzen können, beispielsweise durch ein schnell drehendes Lenkrad, wenn der Fahrer die Hände ohne große Kraftkopplung an dem Lenkrad hält. Ferner kann der Fahrer seiner Aufgabe der Überwachung des Einparkvorganges nur unvollständig nachkommen, wenn ein Lenkrad sich zu schnell dreht, da ein gezielter Eingriff in das schnell drehende Lenkrad zu Korrekturzwecken erschwert, wenn nicht unmöglich ist.

Ferner offenbart die DE 201 05 340 U1 eine dreidimensionale Umfelderfassungsvorrichtung für Straßenfahrzeuge. Diese wird insbesondere zur Detektion von Parklücken eingesetzt. Durch Aufnahme eines zweidimensionalen Entfernungsprofils mittels eines Sensors und Weiterverarbeitung dieses Profils wird ein dreidimensionales Abbild der Umgebung des Fahrzeugs erzeugt.

Aufgabe der Erfindung ist es folglich ein Verfahren zur automatischen Steuerung und/oder Regelung einer Bewegung eines Fahrzeugs während eines Einparkvorgangs zu liefern, das die Nachteile des Stands der Technik überwindet, insbesondere eine von menschlichen Störeinflüssen unabhängige Regelung eines Einparkvorganges eines Fahrzeugs ermöglicht, unter gleichzeitiger Aufrechterhaltung einer maximalen Überwachbarkeit durch einen Fahrer des Fahrzeugs sowie unter Erreichen eines maximalen Komforts für Insassen des Fahrzeugs. Eine weitere Aufgabe der vorliegenden Erfindung ist es, ein Einparksystem zu liefern, das die Nachteile des Stands der Technik überwindet.

Diese Aufgabe wird erfindungsgemäß dadurch gelöst, daß der Sollwert des Längsbewegungsparameters zumindest zeitweise während des Einparkvorganges in Abhängigkeit von zumindest einer Ableitung des Querbewegungsparameters berechnet wird.

Insbesondere kann dabei vorgesehen sein, daß zum Festlegen der Soll-Strecke mittels der Steuer- und/oder Regeleinrichtung die Soll-Strecke, insbesondere basierend auf Meßdaten zumindest eines mit dem Einparksystem in Wirkverbindung stehenden ersten Sensors, vorzugsweise von Meßdaten, die den Abstand des Fahrzeugs zu weiteren Objekten, wie Hindernissen und/oder weiteren Fahrzeugen repräsentieren, vor und/oder während des Einparkvorganges berechnet wird, die Soll-Strecke aus zumindest einer, vorzugsweise von dem Einparksystem umfaßten, Speichereinrichtung vor und/oder während des Einparkvorganges ausgelesen wird und/oder die Soll-Strecke mittels zumindest einer Eingabeeinrichtung in das Einparksystem vor und/oder während des Einparkvorganges eingegeben wird.

Bei den beiden vorgenannten Alternativen kann vorgesehen sein, daß der Längsbewegungsparameter zumindest eine Längsgeschwindigkeit v des Fahrzeugs, insbesondere entlang der Soll-Strecke, beschreibt und/oder der Querbewegungsparameter zumindest einen Lenkwinkel $\delta_H$ des Fahrzeugs und/oder einen Lenkwinkel eines Mittels zur Beeinflussung des Lenkwinkels des Fahrzeugs, wie einem Lenkrad, beschreibt.

Auch wird mit der Erfindung vorgeschlagen, daß der Sollwert des Längsbewegungsparameters, insbesondere die Soll-Längsgeschwindigkeit $v_{soll}$ des Fahrzeugs, zumindest zeitweise während des Einparkvorganges in Abhängigkeit von einem Sollwert des Querbewegungsparameters, vorzugsweise einem Soll-Lenkwinkel $\delta_{H,soll}$, berechnet wird.

Dabei kann insbesondere vorgesehen sein, daß der Sollwert des Querbewegungsparameters, vorzugsweise der Soll-Lenkwinkel $\delta_{H,soll}$, insbesondere mittels der Steuer- und/oder Regeleinrichtung, aus den Daten der Soll-Strecke berechnet wird, basierend auf Meßdaten zumindest eines mit dem Einparksystem in Wirkverbindung stehenden zweiten Sensors, der insbesondere mit dem ersten Sensor identisch ist, vorzugsweise von Meßdaten, die den Abstand des Fahrzeugs von weiteren Objekten, wie Hindernissen und/oder weiteren Fahrzeugen repräsentieren, berechnet wird, aus zumindest einer, vorzugsweise von dem Einparksystem umfaßten, Speichereinrichtung ausgelesen wird und/oder mittels zumindest einer Eingabeeinrichtung in das Einparksystem eingegeben wird.

Auch wird mit der Erfindung vorgeschlagen, daß der Sollwert des Längsbewegungsparameters die Soll-Längsgeschwindigkeit $v_{soll}$ des Fahrzeugs ist, der Sollwert des Längsbewegungsparameters in Abhängigkeit von zumindest einer Ableitung des Sollwerts des Querbewegungsparameters berechnet wird und/oder die Ableitung des Querbewegungsparameters und/oder die Ableitung des Sollwerts des Querbewegungsparameters nach der Zeit erfolgt, wobei der Sollwert des Längsbewegungsparamters vorzugsweise basierend auf einer Lenkwinkelgeschwindigkeit $\dot{\delta}_H$ und/oder einer Soll-Lenkwinkelgeschwindigkeit $\dot{\delta}_{H,soll}$ berechnet wird.

In einer besonders bevorzugten Ausführungsform ist vorgesehen, daß der Sollwert des Längsbewegungsparameters, insbesondere die Soll-Längsgeschwindigkeit $v_{soll}$ des Fahrzeugs, zumindest zeitweise während des Einparkvorganges in Abhängigkeit von, vorzugsweise umgekehrt proportional zu, einer örtlichen Ableitung des Querbewegungsparameters, vorzugsweise des Sollwerts des Querbewegungsparameters, entlang der Soll-Strecke berechnet wird.

In einer vorteilhaften Ausführungsform der Erfindung wird vorgeschlagen, daß der Sollwert des Längsbewegungsparameters zumindest zeitweise während des Einparkvorganges in Abhängigkeit, vorzugsweise proportional, zu einem maximalen Querbewegungsparameter, insbesondere einer maximalen Lenkwinkelgeschwindigkeit $\dot{\delta}_{H,max}$, berechnet wird.

Dabei kann insbesondere vorgesehen sein, daß die Größe des maximalen Querbewegungsparameters im Laufe des Einparkvorganges verändert wird, insbesondere an die Annäherung des Fahrzeugs an ein Hindernis und/oder ein zeitliches Stadium des Einparkvorganges adaptiert wird, vorzugsweise der Querbewegungsparameter zu Beginn des Einparkvorganges geringer ist als während und/oder zum Ende des Einparkvorganges.

Bei den beiden vorgenannten Alternativen wird mit der Erfindung vorgeschlagen, daß die Soll-Längsgeschwindigkeit des Fahrzeugs zumindest zeitweise während des Einparkvorganges gemäß

$$v_{soll}(s) = \left| \left( \frac{\partial}{\partial s'} \delta_{H,soll}(s')\big|_s \right)^{-1} \cdot \dot{\delta}_{H,max} \right|$$

berechnet wird, wobei $\delta_{H,Soll}(s)$ ein Soll-Lenkwinkel an einer Position s, vorzugsweise einer Bogenlänge, des Fahrzeugs entlang der Soll-Strecke repräsentiert.

In einer vorteilhaften Ausführungsform der Erfindung ist vorgesehen, daß zumindest zeitweise während des Einparkvorgangs zumindest ein Sollwert einer zeitlichen Ableitung des Querbewegungsparameters, insbesondere eine Soll-Lenkwinkelgeschwindigkeit, in Abhängigkeit von dem Längsbewegungsparameter, vorzugsweise dem Sollwert des Längsbewegungsparameters, insbesondere der Geschwindigkeit v des Fahrzeugs, und/oder der Position s des Fahrzeugs entlang der Soll-Strecke, insbesondere gemäß $\dot{\delta}_{H,Soll}(s) = \frac{\partial}{\partial s'} \delta_{H,Soll}(s')\big|_s \cdot v$, wobei $\delta_{H,soll}(s)$ ein Soll - Lenkwinkel an der Position s ist, berechnet wird.

Auch kann vorgesehen sein, daß der Querbewegungsparameter zumindest zeitweise während des Einparkvorganges, vorzugsweise mittels der Steuer- und/oder Regeleinrichtung, insbesondere vollautomatisch, auf den Sollwert des Querbewegungsparameters, insbesondere den Soll-Lenkwinkel $\delta_{H,soll}(s)$, und/oder den Sollwert der zeitlichen Ableitung des Querbewegungsparameters, insbesondere die Soll-Lenkwinkelgeschwindigkeit $\dot{\delta}_{H,Soll}(s)$, gesteuert und/oder geregelt wird.

In einer alternativen Ausführungsform kann vorgesehen sein, daß der Sollwert des Längsbewegungsparameters zumindest zeitweise während des Einparkvorganges in Abhängigkeit von, vorzugsweise proportional zu, einem durch einen Fahrer des Fahrzeugs vorgegebenen Querbewegungsparameter, vorzugsweise einer durch einen Fahrer vorgegebene Lenkwinkelgeschwindigkeit $\dot{\delta}_{H,Fahrer}$, berechnet wird, wobei der durch den Fahrer beeinflußte Querbewegungsparameter insbesondere mittels zumindest einer über zumindest einen dritten Sensor, wobei der dritte Sensor insbesondere identisch mit dem ersten und/oder zweiten Sensor ist, gemessenen Größe bestimmt wird.

Dabei wird mit der Erfindung vorgeschlagen, daß die Soll-Längsgeschwindigkeit des Fahrzeugs zumindest zeitweise während des Einparkvorgangs gemäß $v_{soll}(s) = \left| \left( \frac{\partial}{\partial s'} \delta_{H,soll}(s')\big|_s \right)^{-1} \cdot \dot{\delta}_{H,Fahrer} \right|$ berechnet wird, wobei $\delta_{H,soll}(s)$ der Soll-Lenkwinkel an der Position s entlang der Soll-Strecke ist.

Auch wird mit der Erfindung vorgeschlagen, daß der Sollwert des Längsbewegungsparameters, zumindest zeitweise während des Einparkvorganges, in Abhängigkeit von zumindest einer Differenz zwischen einem Sollwert des Querbewegungsparameters, insbesondere dem Soll-Lenkwinkel, und einem Istwert des Querbewegungsparameters, insbesondere einem Ist-Lenkwinkel, der vorzugsweise durch den Fahrer vorgegeben wird, berechnet wird.

Dabei kann insbesondere vorgesehen sein, daß der Sollwert des Längsbewegungsparameters in Abhängigkeit von der, insbesondere betragsmäßigen, Differenz zwischen dem Sollwert des Querbewegungsparameters und dem Istwert des Querbewegungsparameters berechnet wird, insbesondere der Sollwert des Längsbewegungsparameters mit zunehmender, insbesondere betragsmäßiger, Differenz zwischen dem Sollwert des Querbewegungsparameters und dem Istwert des Querbewegungsparameters monoton abnimmt, vorzugsweise der Längsbewegungsparameter auf Null reduziert wird, insbesondere das Fahrzeug angehalten wird, wenn die Differenz zwischen dem Sollwert des Querbewegungsparameters und dem Istwert des Querbewegungsparameters einen vorbestimmten Wert überschreitet und/oder der Sollwert des Querbewegungsparameters einen vorbestimmten Wertebereich, insbesondere einen maximalen Lenkwinkelbetrag des Fahrzeugs, überschreitet.

Mit der Erfindung wird dabei vorgeschlagen, daß nach einem Anhalten des Fahrzeugs eine Aufforderung an den Fahrer ausgegeben wird, das Fahrzeug in eine Richtung entgegen einer durch die Soll- Trajektorie vorgegebenen Soll-Längsrichtung zu bewegen.

Ferner ist bevorzugt, daß einem Fahrer über zumindest eine, vorzugsweise visuelle, hörbare und/oder haptische Signaleinrichtung, insbesondere in Form eines Lautsprechers, eines haptisch aktiven Lenkrads und/oder zumindest einer visuellen Anzeige, eine Änderung des Querbewegungsparameters empfohlen wird, insbesondere eine empfohlene Drehrichtung eines Lenkrads signalisiert wird, um die Differenz zwischen dem Sollwert des Querbewegungsparameters, insbesondere dem Soll-Lenkwinkel, und dem Istwert des Querbewegungsparameters, insbesondere dem Ist-Lenkwinkel, zu reduzieren, und/oder dem Fahrer eine Anweisung zum Bewegen des Fahrzeugs entgegen der Soll-Längsrichtung der Soll-Trajektorie, insbesondere nach einem Anhalten des Fahrzeugs, angezeigt wird.

Ferner wird mit der Erfindung vorgeschlagen, daß der Sollwert des Längsbewegungsparameters zumindest zeitweise während des Einparkvorganges zusätzlich in Abhängigkeit von zumindest einem Maximalwert des Längsbewegungsparameters, einer maximalen Längsbeschleunigung des Fahrzeugs, insbesondere entlang der Soll-Strecke, zumindest einer, insbesondere maximalen, Längsbeschleunigungsänderung des Fahrzeugs und/oder zumindest einem Abstand des Fahrzeugs von einem Hindernis, wie einem zweiten Fahrzeug oder einem feststehendem Hindernis, berechnet wird, insbesondere der Sollwert des Längsbewegungsparameters, wie die Soll-Längsgeschwindigkeit, durch den Maximalwert des Längsbewegungsparameters, insbesondere durch eine Maximallängsgeschwindigkeit $v_{max}$, begrenzt wird.

Schließlich kann das erfindungsgemäße Verfahren dadurch gekennzeichnet sein, daß die Soll-Strecke während des Einparkvorganges und/oder nach einem Anhalten des Fahrzeugs, vorzugsweise unter Auswertung von Meßdaten des ersten, zweiten und/oder dritten Sensors, nachberechnet und/oder aktualisiert wird.

Die das Einparksystem betreffende Aufgabe wird gelöst durch ein automatisches Einparksystem für ein Fahrzeug umfassend zumindest eine Steuer- und/oder Regeleinrichtung,
wobei das Einparksystem insbesondere die Steuer- und/oder Regeleinrichtung, zur Ausführung des erfindungsgemäßen Verfahrens eingerichtet ist.

Dabei wird durch die Erfindung zumindest ein mit der Steuer- und/oder Regeleinrichtung in Wirkverbindung stehender Sensor, vorzugsweise zumindest ein Abstandssensor, zumindest ein Sensor zur Messung zumindest eines Längsbewegungsparameters des Fahrzeugs und/oder zumindest ein Sensor zur Messung zumindest eines Querbewegungsparameters des Fahrzeugs vorgeschlagen.

Dabei kann insbesondere vorgesehen sein, daß mittels zumindest eines Seitenabstandssensors, vorzugsweise mittels zwei bis vier Seitenabstandssensoren, ein Abstand des Fahrzeugs zu zumindest einem, insbesondere im Bezug auf eine Soll-Strecke des Fahrzeugs während eines Einparkvorganges, seitlich von dem Fahrzeug angeordneten Objekts, mittels zumindest eines Heckabstandssensors, vorzugsweise mittels vier Heckabstandssensoren, ein Abstand des Fahrzeugs zu zumindest einem, im Bezug auf die Soll-Strecke im Heckbereich des Fahrzeugs angeordneten, Objekts und/oder mittels zumindest eines Frontabstandssensors, vorzugsweise mittels vier bis sechs Frontabstandssensoren, ein Abstand des Fahrzeugs zu zumindest einem, im Bezug auf die Soll-Strecke im Frontbereich des Fahrzeugs angeordneten, Objekts bestimmbar ist.

Bei den beiden vorgenannten Alternativen ist bevorzugt, daß mittels der Meßwerte des Abstandssensors zumindest eine Soll-Strecke des Fahrzeugs vor und/oder während eines Einparkvorganges, zumindest ein Sollwert und/oder zumindest ein Maximalwert des Längsbewegungsparameters des Fahrzeugs und/oder zumindest ein Sollwert und/oder zumindest ein Maximalwert des Querbewegungsparameters des Fahrzeugs, insbesondere mittels der Steuer- und/oder Regeleinrichtung, bestimmbar ist.

Auch wird mit der Erfindung vorgeschlagen, daß der Abstandssensor unter Einsatz elektromagnetischer Wellen, insbesondere von Mikrowellen-, mm-Wellen-, Infrarot- und/oder Ultraschallstrahlung einen Abstand bestimmt und/oder zumindest ein Radarelement, zumindest ein Lidarelement, zumindest ein Sonarelement, zumindest ein Multisensorelement und/oder zumindest ein Photonic Mixing Device umfaßt.

Bevorzugt ist ferner, daß der Sensor zur Messung des Längsbewegungsparameters zumindest ein Odometer und/oder zumindest einen Raddrehzahlsensor umfaßt, vorzugsweise zumindest einen aktiven magnetostatischen Raddrehzahlsensor, insbesondere umfaßt von einem ABS- und/oder ESP-System des Fahrzeugs.

Auch wird mit der Erfindung vorgeschlagen, daß der Sensor zur Messung des Querbewegungsparameters zumindest einen Lenksäulen- bzw. Ritzelsensor in Wirkverbindung mit einem Lenksystem des Fahrzeugs, vorzugsweise einem Lenkrad, einer Lenksäule und/oder einem Lenkgestänge des Fahrzeugs, umfaßt, wobei der Sensor zur Messung des Querbewegungsparameters vorzugsweise zumindest einen magnetischen Aufnehmer umfaßt und/oder von einem ABS- und/oder ESP-System des Fahrzeugs umfaßt ist.

Bevorzugt weist das erfindungsgemäße Einparksystem zumindest einen Aktor zur Beeinflussung des Längsbewegungsparameters und/oder des Querbewegungsparameters des Fahrzeugs auf, wobei insbesondere mittels des Aktors der Längsbewegungsparameter, vorzugsweise auf einen Sollwert, und/oder der Querbewegungsparameter, vorzugsweise auf einen Sollwert, steuer- und/oder regelbar ist.

Dabei ist insbesondere bevorzugt, daß mittels zumindest eines Lenkaktors zumindest ein Lenkwinkel des Fahrzeugs beeinflußbar ist, wobei der Lenkaktor vorzugsweise zumindest einen Momentsteller, insbesondere als inhärente Funktion einer, vorzugsweise elektromechanischen, Lenkunterstützung in das Lenksystem des Fahrzeugs integriert und/oder als externer Momentensteller, wie als separater Motor, in ein, vorzugsweise hydraulisches, Lenkunterstützungssystem integriert, und/oder zumindest einen Winkelüberlagerungssteller, der insbesondere mittels zumindest eines Getriebes, wie einem Planetengetriebe oder einem Harmonic Drive, mit dem Lenksystem des Fahrzeugs in Wirk-

EP 1 812 272 B1

verbindung steht, umfaßt.

Bei den beiden vorgenannten Alternativen wird bevorzugt, daß mittels zumindest eines Bremsaktors der Längsbewegungsparameter, vorzugsweise zumindest eine Längsgeschwindigkeit des Fahrzeugs beeinflußbar ist, wobei der Bremsaktor vorzugsweise ziunindest eine elektrohydraulische und/oder elektromechanische Bremse und/oder einen elektronisch steuerbaren Bremskraftverstärker umfaßt und/oder über den Bremsaktor in eine, vorzugsweise elektrohydraulische, Bremsansteuerung eines ESP- und/oder ABS-Systems des Fahrzeugs eingreifbar ist

Auch wird mit der Erfindung vorgeschlagen, daß der Aktor zumindest eine Antriebssteuerung zur Beeinflussung der Antriebsleistung zumindest eines Antriebaggregats des Fahrzeugs, wie einem Verbrennungsmotor, umfaßt.

Ferner wird für das automatische Einparksystem gemäß der Erfindung zumindest eine Speichereinrichtung in Wirkverbindung mit der Steuer- und/oder Regeleinrichtung vorgeschlagen, wobei mittels der Speichereinrichtung vorzugsweise zumindest eine Soll-Strecke, zumindest ein Sollwert des Längsbewegungsparameters und/oder zumindest ein Sollwert des Querbewegungsparameters speicherbar ist bzw. sind.

Ferner kann ein automatisches Einparksystem zumindest eine Eingabeeinrichtung in Wirkverbindung mit der Steuer- und/oder Regeleinrichtung aufweisen, wobei mittels der Eingabeeinrichtung vorzugsweise zumindest eine Soll-Strecke, zumindest ein Sollwert des Längsbewegungsparameters und/oder zumindest ein Sollwert des Querbewegungsparameters in das Einparksystem eingebbar ist und/oder die Eingabeeinrichtung zumindest eine Tastatur, zumindest eine Spracheingabeeinrichtung und/oder zumindest einen Touchscreen umfaßt.

Schließlich wird mit der Erfindung zumindest eine Signaleinrichtung in Wirkverbindung mit der Steuer- und/oder Regeleinrichtung, wobei vorzugsweise mittels der Signaleinrichtung dem Fahrer des Fahrzeugs visuelle, haptische und/oder hörbare Anweisungen zur Einstellung zumindest eines Querbewegungsparameters signalisierbar sind und/oder die Signaleinrichtung zumindest ein Display, zumindest einen Sitzvibrator, zumindest ein haptisch aktives Pedal und/oder zumindest einen Lautsprecher umfaßt.

Der Erfindung liegt somit die überraschende Erkenntnis zugrunde, daß durch eine vollautomatische Steuerung bzw. Regelung, d.h. eine Steuerung und/oder Regelung ohne eine direkte Einflußnahme durch einen Fahrer des Fahrzeugs, eines Längsbewegungsparameters des Fahrzeugs auf einen Sollwert, der in Abhängigkeit von einem Querbewegungsparameter und einer Position des Fahrzeugs, insbesondere entlang einer Soll-Strecke, die im allgemeinen auch als Solltrajetktorie oder Sollkurs bezeichnet wird, bestimmt wird, erreicht wird, daß gleichzeitig bei einer hohen Genauigkeit und hohen Reproduzierbarkeit sowie hohen Geschwindigkeit eines Einparkvorgangs der Einparkvorgang für einen Fahrzeuginsassen komfortabel ist und ein Fahrer während des Einparkvorgangs stets überwachend und kontrollierend in den Einparkvorgang eingreifen kann, ohne daß das Risiko einer Verletzung des Fahrers besteht. Bei der Ausführung des Verfahrens, insbesondere bei der Bestimmung einer Solltrajektorie, entspricht vorzugsweise der anfängliche Sollwert des Querbewegungsparameters, insbesondere der Soll-Lenkwinkel $\delta_{H,soll}$ bzw. eine Soll-Trajektorie des Lenkwinkels, dem aktuellen Ist-Wert des Lenkwinkels. Auch kann vorgesehen sein, daß der Sollwert des Querbewegungsparameters, insbesondere die Soll-Trajektorie bzw. Soll-Strecke, derartig bestimmt bzw. festgelegt wird, daß eine Differenz zwischen dem Ist-Wert des Querbewegungsparameters und dem Sollwert des Querbewegungsparameters vermieden, zumindest reduziert wird.

Der vorliegenden Erfindung liegt die Erkenntnis zugrunde, daß eine Regelstrategie eingesetzt wird, bei der eine Längs- und Querführung des Fahrzeugs so aufeinander abgestimmt werden, daß während des Einparkvorgangs nur moderate Bewegungsänderungen des Fahrzeugs sowie moderate Bewegungsänderungen an Steuereinrichtungen des Fahrzeugs, wie einem Lenkrad, durchgeführt werden. Dies führt dazu, daß bei großen Krümmungsgradienten eines Fahrwegs langsamere Längsgeschwindigkeiten des Fahrzeugs eingestellt werden, um so eine zur Einhaltung einer Soll-Strecke bzw. einer Solltrajektorie notwendige Lenkgeschwindigkeit bzw. Geschwindigkeit der Bewegung eines Lenkrades zu begrenzen. Hierdurch werden überraschende und schnelle Bewegungen des Querbewegungsparameters, insbesondere eine zu hohe Drehgeschwindigkeit eines Lenkrads, und des Längsbewegungsparameters vermieden und somit einer eventuellen Verletzung einer sich in dem Fahrzeug befindlichen Person entgegengewirkt. Die Regelungs- bzw. Steuerungsvorgänge des erfindungsgemäßen Verfahrens bzw. Einparksystems werden auf diese Weise in ihrer Dynamik begrenzt, was die Möglichkeit einer Überwachung weiter erhöht. Dies führt zu einer größeren Sicherheit und Kontrollierbarkeit eines Fahrzeugs bei Verwendung des erfindungsgemäßen Verfahrens bzw. Einparksystems. Ferner führt das durch das erfindungsgemäße Einparksystem durchgeführte Einparkmanöver zu einem Manöver, das dem von einem Menschen durchgeführten Einparkmanöver ähnelt. Um die Kontrollierbarkeit des durch das erfindungsgemäße automatische Einparksystem durchgeführten Einparkvorgangs durch einen Fahrer zu erhöhen, ohne die Genauigkeit des Einparkvorgangs zu reduzieren, kann in einer bevorzugten Ausführungsform der Querbewegungsparameter durch einen Fahrer und zwar in Abhängigkeit von einem automatisch gesteuerten bzw. geregelten Längsbewegungsparameter, eingestellt werden, so daß eine Kontrolle des Fahrzeugs durch den Fahrer mittels des erfindungsgemäßen automatischen Einparksystems während des Einparkvorgangs besteht, also der Fahrer durch die Kontrolle der Querbewegung aktiv in der Regelschleife verbleibt.

Weitere Merkmale und Vorteile der Erfindung ergeben sich aus der nachstehenden Beschreibung, in der Ausführungsbeispiele der Erfindung anhand von schematischen Zeichnungen im einzelnen erläutert werden.

Dabei zeigt:

Figur 1    eine Soll-Strecke eines Fahrzeugs bei einem Parkvorgang;

Figur 2    einen Soll-Lenkwinkel in Abhängigkeit von einer Soll-Strecke bei einem Einparkvorgang eines Fahrzeugs;

Figur 3    ein Diagramm, das den zeitlichen Verlauf mehrerer Kenngrößen während eines Einparkvorganges mit einem Einparksystem gemäß der vorliegenden Erfindung darstellt; und

Figur 4    ein schematisches Blockschaltbild eines erfindungsgemäßen automatischen Einparksystems.

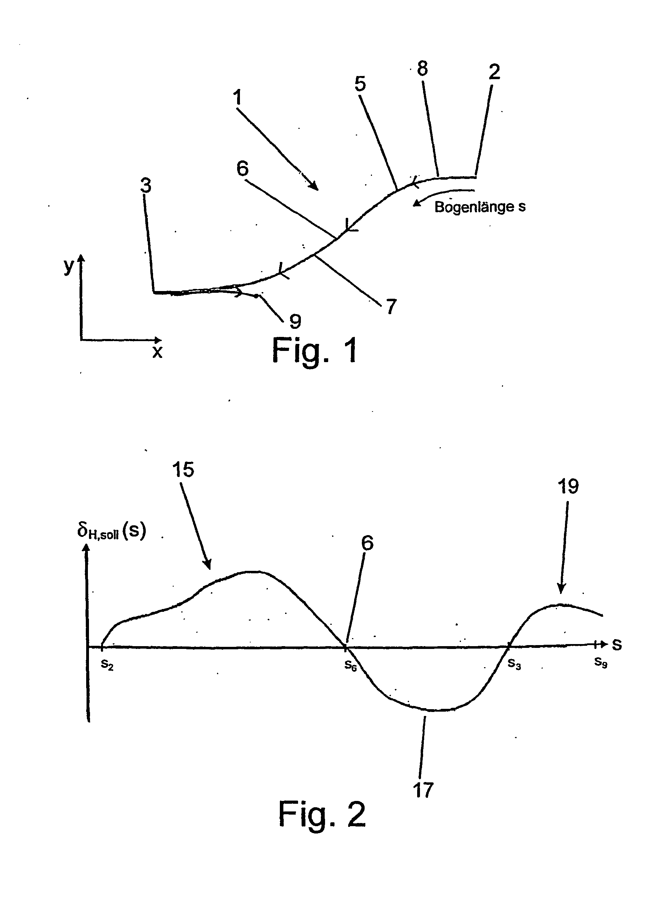

In Figur 1 ist zur Erläuterung des erfindungsgemäßen automatischen Einparksystems und des erfindungsgemäßen Verfahrens zur automatischen Längsregelung eines Fahrzeugs eine zweidimensionale Solltrajektorie bzw. Soll-Strecke 1 eines Fahrzeugbezugspunktes, wie einem Fahrzeugschwerpunkt, die mathematisch oder empirisch bestimmt werden kann, dargestellt. Mit anderen Worten stellt die Soll-Strecke 1 den Weg des Fahrzeugs während des Einparkvorganges dar. Dabei befindet sich der Fahrzeugbezugspunkt zu Beginn eines Einparkvorganges an einem Startpunkt 2 und bewegt sich, der Soll-Strecke 1 folgend, zu einem Umkehrpunkt 3 in eine erste Bewegungsrichtung, im wesentlichen in negative x-Richtung. Das Fahrzeug folgt der Soll-Strecke 1 zwischen dem Startpunkt 2 und dem Umkehrpunkt 3 in einer ersten Kurve 5 und anschließend in einer zweiten Kurve 7. Dabei ist die Krümmungsrichtung der ersten Kurve 5 entgegengesetzt zur Krümmungsrichtung der zweiten Kurve 7 und die erste Kurve 5 geht in die zweite Kurve 7 an einem Punkt 6 auf der Soll-Strecke 1, nachdem der Punkt 8 der ersten Kurve 5 durchlaufen wurde, über. Nach Erreichen des Umkehrpunkts 3 bewegt sich das Fahrzeug zu einem Haltepunkt 9 in eine zweite Bewegungsrichtung, im wesentlichen in positive x-Richtung, d.h. in eine Richtung, die im wesentlichen umgekehrt zur ersten Bewegungsrichtung ist.

Die Soll-Strecke 1 bildet die Grundlage für die nachfolgend beschriebene Wegmessung bzw. Odometrie. Die Soll-Strecke 1 hängt von der aktuellen Position des Fahrzeugs und Kenngrößen der Parklücke, insbesondere der Größe der Parklücke ab. Vorzugsweise wird die Soll-Strecke 1 zumindest einmal vor Beginn des Einparkvorgangs berechnet, jedoch kann sie auch mittels einer Eingabevorrichtung des Einparksystems vorgegeben werden oder aus einer Speichervorrichtung ausgelesen werden. In Abhängigkeit von der Position des Fahrzeugs entlang der Soll-Strecke 1 wird ein Sollwert eines Querbewegungsparameters des Fahrzeugs in Form eines Soll-Lenkwinkels $\delta_{H,soll}$ bestimmt. Diese Bestimmung erfolgt insbesondere in Abhängigkeit von der Fahrzeuggeometrie und den Kenngrößen des Lenksystems

In Figur 2 ist ein beispielhafter Verlauf eines Soll-Lenkwinkels $\delta_{H,soll}$ in Abhängigkeit von einer Position des Fahrzeugs entlang der Soll-Strecke 1, ausgedrückt durch die Bogenlänge s entlang der Soll-Strecke 1, aufgetragen. Wie in einer Zusammenschau mit der Figur 1 zu sehen ist, ist der Soll-Lenkwinkel $\delta_{H,soll}(s)$ in einem ersten Bereich 15 positiv. Dieser Bereich 15 in Figur 2 entspricht der ersten Kurve 5 der Soll-Strecke 1 in Figur 1. Die Bogenlänge s weist an dem Punkt 2 in Figur 1 den Wert $S_2$ auf, während die Bogenlänge s an dem Punkt 6 in Figur 1 den Wert $s_6$ aufweist. Der positive Wert des Soll-Lenkwinkels $\delta_{H,soll}$ bedeutet, daß ein Lenkrad des Fahrzeugs in eine erste Richtung ausgeschlagen wird. Dabei nimmt der Lenkwinkel im Bereich 15 bis zu einem maximalen Wert zu, um dann wieder abzunehmen, d.h. das Lenkrad wird dann in eine entgegengesetzte Richtung bewegt, bis an dem Punkt 6 der Soll-Strecke 1, d.h. bei der Bogenlänge $s_6$ das Lenkrad in eine neutrale Position gebracht wird. In einem zweiten Bereich 17 nimmt der Soll-Lenkwinkel $\delta_{H,soll}$ einen negativen Wert ein, das bedeutet, das Lenkrad wird in eine zu der ersten Richtung entgegengesetzte zweite Richtung ausgeschlagen. Dabei nimmt der Soll-Lenkwinkel zunächst betragsmäßig zu, um dann wieder abzunehmen, so daß der Soll-Lenkwinkel $\delta_{H,soll}$ am Umkehrpunkt 3 wieder Null beträgt, d.h. daß sich das Lenkrad des Fahrzeugs dann in einer neutralen Position befindet. Wie aus Figur 2 ersichtlich schließt sich an den zweiten Bereich 17 wieder ein dritter Bereich 19 an. Dieser Bereich 19 entspricht dem Teil der in Figur 1 dargestellten Soll-Strecke 1 bei der Bewegung von dem Umkehrpunkt 3 zum Haltepunkt 9. Der Soll-Lenkwinkel $\delta_{H,soll}$ nimmt in dem dritten Bereich 19 einen positiven Wert ein, so daß die Soll-Strecke 1 in Figur 1 in einem Bogen verläuft. Durch den Ausschlag des Lenkrads gemäß dem Soll-Lenkwinkel im dritten Bereich 19 wird eine abschließende Korrektur der Fahrzeugsrichtung, insbesondere ein "Geradeziehen" des Fahrzeugs bewirkt, d.h. die Längsachse des Fahrzeugs im wesentlichen entlang der Parklücke ausgerichtet.

Gemäß der Erfindung wird von einer Steuer- und/oder Regeleinrichtung in Abhängigkeit von der Soll-Strecke 1 der Soll-Lenkwinkel $\delta_{H,soll}$ an der jeweiligen Position entlang der Soll-Strecke 1 bestimmt. Dies bedeutet, daß die Wegmessung bzw. Odometrie entlang der Soll-Strecke 1 zur Bestimmung des Soll-Lenkwinkels $\delta_{H,soll}$ benutzt wird. Diese Funktion kann beispielsweise der in Figur 2 dargestellten Funktion $\delta_{H,soll}(s)$ entsprechen. Es wird bevorzugt, daß die Soll-Strecke 1 und/oder der Soll-Lenkwinkel $\delta_{H,soll}$ zumindest bei Beginn eines Parkvorgangs berechnet, bzw. eingegeben oder aus einer Speichereinrichtung abgerufen wird bzw. werden und/oder während des Parkvorgangs in gleichmäßigen Abständen aktualisiert wird bzw. werden, wodurch Abweichungen von der bisherigen Soll-Strecke 1 nachkorrigiert werden können. Dies bewirkt, daß eine prädiktive Regelung eingesetzt wird, d.h. für den zukünftigen Soll-Verlauf des Einparkvorganges sowohl die Strecke des Fahrzeugsbezugspunkts in Form der Soll-Strecke 1 als auch

des Soll-Lenkwinkels $\delta_{H,soll}$ bestimmt wird bzw. werden.

In einer ersten Ausführungsform der Erfindung wird sowohl ein Längsbewegungsparameter als auch ein Querbewegungsparameter vollautomatisch, d.h. ohne eine direkte Beeinflussung durch den Fahrer des Fahrzeugs, gesteuert bzw. geregelt. Dabei beschreibt der Längsbewegungsparameter insbesondere eine Längsgeschwindigkeit v des Fahrzeugs bei einer Bewegung des Fahrzeugs im wesentlichen entlang der Soll-Strecke 1 und wird auf einen Sollwert des Längsbewegungsparameters gesteuert bzw. geregelt. Der Querbewegungsparameter, insbesondere ein Lenkwinkel oder eine Lenkwinkelgeschwindigkeit, beschreibt eine Bewegung des Fahrzeugs zumindest teilweise in eine Richtung senkrecht zu der Soll-Strecke 1 und wird auf einen Sollwert des Querbewegungsparameters gesteuert bzw. geregelt.

Dies bedeutet, daß die Bewegung des Fahrzeugs während eines Einparkvorgangs vollautomatisch abläuft, d.h. der Fahrer weder einen Längsbewegungsparameter, wie eine Geschwindigkeit des Fahrzeugs, noch einen Querbewegungsparameter, wie einen Lenkwinkel beeinflußt. Es ist ihm lediglich möglich, den Parkvorgang zu beobachten und gegebenenfalls, beispielsweise, um eine Kollision mit einem nicht erkannten Hindernis zu vermeiden, in den vollautomatischen Einparkvorgang einzugreifen, indem er beispielsweise den Lenkwinkel verändert oder die Fahrzeuggeschwindigkeit durch Betätigen einer Bremse des Fahrzeugs verringert.

Aus der Soll-Lenkwinkelfunktion $\delta_{H,soll}(s)$ läßt sich eine Soll-Lenkwinkelgeschwindigkeit in Abhängigkeit von der Längsgeschwindigkeit v des Fahrzeuges bestimmen. Dieser Zusammenhang läßt sich durch die Formel

$$\dot{\delta}_{H,Soll}(s) = \frac{\partial}{\partial s'}\delta_{H,Soll}(s')\Big|_s \cdot v \qquad (1)$$

d.h. das Produkt des Gradienten des Soll-Lenkwinkels von s und der Längsgeschwindigkeit, ausdrücken. Um die erfindungsgemäße vollautomatische Längsbewegungsregelung während eines Parkvorganges durchzuführen, wird bei der Erfindung ausgehend von dem mathematischen Zusammenhang, der in der Formel (1) ausgedrückt ist, für die jeweilige Position des Fahrzeugs, ausgedrückt durch die Bogenlänge s entlang der Soll-Strecke 1, eine Soll-Längsgeschwindigkeit in Abhängigkeit zu einer maximalen Lenkwinkelgeschwindigkeit $\dot{\delta}_{H,max}$ berechnet. Beispielsweise läßt sich die Soll-Längsgeschwindigkeit $v_{soll}$ numerisch gemäß der Formel

$$v_{soll}(s) = \left| \left( \frac{\partial}{\partial s'}\delta_{H,soll}(s')\Big|_s \right)^{-1} \cdot \dot{\delta}_{H,max} \right| \qquad (2)$$

ermitteln.

Während der Durchführung des Parkvorgangs wird die Längsgeschwindigkeit des Fahrzeugs bei einer Bewegung entlang der Soll-Strecke 1 an der jeweiligen Position auf die so berechnete Soll-Längsgeschwindigkeit $v_{soll}$ (s) geregelt. Durch eine geeignete Auswahl der maximalen Lenkwinkelgeschwindigkeit $\delta_{H,max}$ wird erreicht, daß zu hohe Lenkradgeschwindigkeiten auch bei einem vollautomatischen Einparkvorgang gemäß der Erfindung, bei der der Fahrer in einem Normalbetrieb nicht in die Steuerung der Längsbewegungsgeschwindigkeit des Fahrzeugs beteiligt ist, vermieden werden. Dadurch werden schmerzhafte Verletzungen des Fahrers, wenn der Fahrer die Hände ohne große Kraftkopplung am Lenkrad hat, vermieden und es wird sichergestellt, daß der Fahrer seiner Aufgabe der Überwachung des Einparkvorgangs vollständig nachkommen kann, da er immer gefahrlos einen gezielten Eingriff in das sich drehende Lenkrad während des Einparkvorgangs durchführen kann. In bevorzugten Ausführungsformen der Erfindung kann die Soll-Längsgeschwindigkeit $v_{soll}$ auch zusätzlich durch eine maximale Längsgeschwindigkeit des Fahrzeugs begrenzt werden, um eine überhöhte Längsgeschwindigkeit des Fahrzeugs während des Einparkvorgangs zu vermeiden. Ferner können auch weitere Einflußgrößen zur Berechnung der Soll-Längsgeschwindigkeit des Fahrzeugs herangezogen werden. Beispielsweise kann eine maximale Längsbeschleunigung und/oder eine, insbesondere maximale, Längsbeschleunigungsänderung vorgegeben werden. So kann zum Beispiel ein ungewollter Ruck bei der Bewegung des Fahrzeugs vermieden werden. Dies erhöht den Komfort und die Vorhersehbarkeit der Soll-Längsgeschwindigkeit $v_{soll}$, und führt damit zu einem besseren und angenehmeren Fahrerlebnis während des Einparkvorgangs. Auch kann die Soll-Längsgeschwindigkeit $v_{soll}$ in einer bevorzugten Ausführungsform der Erfindung zusätzlich von einem mittels eines Abstandssensors gemessenen Abstands zu einem Hindernis, wie beispielsweise einem zweiten Fahrzeug oder einem feststehenden Hindernis, abhängen. Es kann auch in dem erfindungsgemäßen automatischen Einparksystem vorgesehen sein, daß am Anfang des Einparkvorganges der zugelassene maximale Querbewegungsparameter, insbesondere die

maximale Lenkwinkelgeschwindigkeit $\dot{\delta}_{H,max}$, geringer ist als während und/oder zum Ende des Einparkvorganges, also die maximale Lenkwinkelgeschwindigkeit $\delta_{H,max}$ adaptiert wird, um den Fahrer nicht mit einem Einsetzen der Regelung des automatischen Einparksystems zu überraschen. Als weitere Querbewegungsparameter, auf deren Grundlage die Soll-Längsgeschwindigkeit des Fahrzeugs zusätzlich oder alternativ bestimmt werden kann, kommen eine maximale Lenkwinkelbeschleunigung oder ein maximales Lenkraddrehmoment in Betracht.

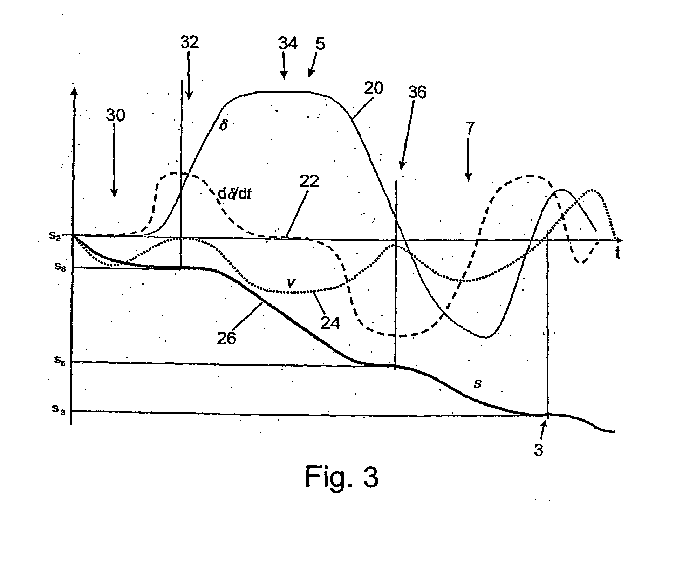

In Figur 3 ist ein exemplarischer Verlauf der verschiedenen Bewegungsparameter während eines mit dem erfindungsgemäßen automatischen Einparksystem durchgeführten Einparkvorgangs dargestellt. Dabei repräsentiert ein durchgehend gezeichneter erster Graph 20 den Lenkwinkel $\delta(t)$, also einen ersten Querbewegungsparameter, und ein gestrichelt gezeichneter zweiter Graph 22 den Lenkwinkel $\delta(t)$ in einer zeitlichen Ableitung, also die Lenkwinkelge-schwindigkeit $d\delta/dt$, die einen zweiten Querbewegungsparameter darstellt. Als gepunktet gezeichneter dritter Graph 24 ist die Längsgeschwindigkeit $v(t)$ des Fahrzeuges, also ein Längsbewegungsparameter, aufgetragen. Ferner ist in dem Diagramm der Figur 3 als fett durchgezogen gezeichneter vierter Graph 26 die Position des Fahrzeugs im Laufe des Einparkvorgangs dargestellt, indem die Bogenlänge s über die Zeit aufgetragen ist. In einem ersten Zeitabschnitt 30 wird das Fahrzeug beschleunigt, was im wesentlichen einem Beginn des Einparkvorgangs d.h. dem Bereich der Soll-Strecke 1 zwischen dem Punkt 2 und 8 entspricht. Anschließend wird zu Beginn der ersten Kurve 5 (siehe Figur 1) der Soll-Strecke 1 im Punkt 8, bei dem die Bogenlänge s den Betrag $s_8$ aufweist, und eine Erhöhung des Lenkwinkels $\delta$, wie sie in dem ersten Graph 20 in einem zweiten Zeitabschnitt 32 dargestellt ist, erfolgt die Längsgeschwindigkeit v des Fahrzeugs durch die Steuer- und/oder Regeleinrichtung automatisch reduziert, so daß die Lenkwinkelgeschwindigkeit $d\delta/dt$ begrenzt wird (siehe zweiter Graph 22 der Lenkwinkelgeschwindigkeit $d\delta/dt$ im zweiten Zeitabschnitt 32 an einer Position $s_8$). Anschließend, wenn der Lenkwinkel $\delta$ einen maximalen Wert aufweist, und dieser Wert kurzzeitig während eines dritten Zeitabschnitts 34 gehalten wird, wird das Fahrzeug automatisch wieder in Längsrichtung beschleunigt, um bei einem anschließenden Übergang von der ersten Kurve 5 in die zweite Kurve 7 der Soll-Strecke 1 in einem vierten Zeitabschnitt 36 an einer Position der Soll-Strecke 1, die der Bogenlänge $s_6$ entspricht, also, im wesentlichen der Position 6 auf der Soll-Strecke 1 entspricht, wieder gebremst zu werden. Dadurch wird wiederum eine hohe Lenkwinkelgeschwindigkeit vermieden. Anschließend wird das Fahrzeug wieder in Längsrichtung beschleunigt, um an einer Position, die im wesentlichen dem Umkehrpunkt 3 der Soll-Strecke 1 entspricht und bei der die Bogenlänge $s_3$ beträgt, kurzzeitig zum Stehen zu kommen, wobei an dieser Position auch eine hohe Lenkwinkelgeschwindigkeit $d\delta/dt$, wie es aus dem gestrichelten zweiten Graph 22 an der Position $s_2$ entnehmbar ist, auftritt. Wie der Figur 3 entnommen werden kann, liegen sowohl die Längsgeschwindigkeit v des Fahrzeugs, wie auch die Lenkwinkelgeschwindigkeit $d\delta/dt$ des Fahrzeuges innerhalb vorherbestimmter Grenzen, so daß das Fahrzeug keine für den Fahrer überraschende Bewegungen ausführt, und somit ein komfortabler Einparkvorgang durchgeführt wird.

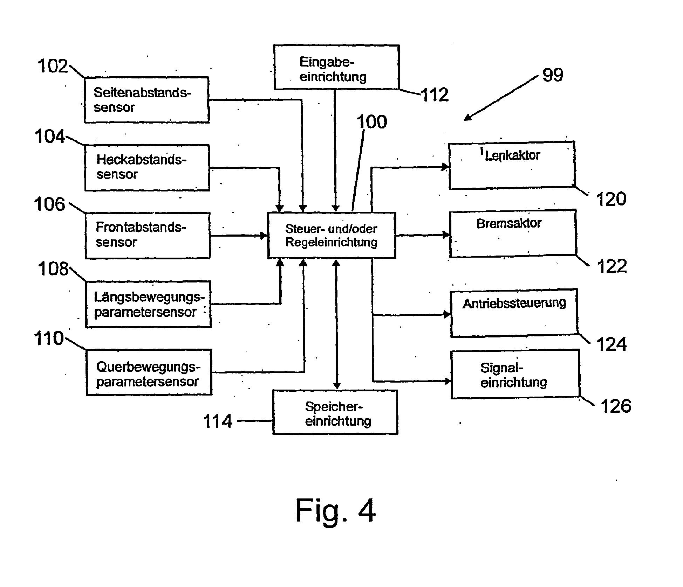

In Figur 4 ist schematisch ein automatisches Einparksystem 99 gemäß der Erfindung dargestellt. Das automatische Einparksystem 99 weist eine Steuer- und/oder Regeleinrichtung 100 auf, die mit einer Vielzahl von Sensoren 102, 104, 106, 108, 110 in Wirkverbindung steht. Beispielsweise kann das automatische Einparksystem 99 zumindest einen Abstandssensor 102, vorzugsweise zwei bis vier über die Fahrzeugbreite verteilte seitliche Abstandssensoren, der bzw. die in eine Richtung im wesentlichen senkrecht zur Längsrichtung des Fahrzeugs ausgerichtet ist bzw. sind, zumindest einen Heck- 104 und/oder zumindest einen Frontabstandssensor 106, vorzugsweise vier Heckabstandssensoren und/oder vier bis sechs Frontabstandssensoren, die im wesentlichen in bzw. entgegen der Richtung der Längsbewegung des Fahrzeugs ausgerichtet sind, zumindest einen Längsbewegungsparametersensor 108 zur Messung des Längsbewegungsparameters, beispielsweise der Längsgeschwindigkeit v, und/oder zumindest einen Querbewegungsparametersensor 110, beispielsweise einen Lenkwinkelsensor, aufweisen. Ferner kann die Steuer- und/oder Regeleinrichtung 100 auch mit einer zumindest Eingabeeinrichtung 112 und zumindest einer Speichereinrichtung 114 in Wirkverbindung stehen. Diese Einrichtungen 112, 114 dienen insbesondere dazu, eine Soll-Strecke 1 bzw. Solltrajektorie einzugeben bzw. zu speichern.

Der seitliche Abstandssensor 102 wird insbesondere zur Vermessung einer Parldücke verwendet. Dabei wird ausgenutzt, daß in einer besetzten Parldücke ein Objekt einen geringeren Abstand zu dem Fahrzeug aufweist als ein Objekt in einer nicht besetzten Parklücke. Insbesondere wird eine Parklücke erkannt, wenn entweder kein Objekt durch den Abstandssensor 102 detektiert wird, oder ein Objekt detektiert wird, das einen Abstand zu dem Fahrzeug aufweist, der um einen Mindestabstand, der ca. eine Fahrzeugbreite beträgt, größer ist, als zuvor detektierte Objekte, wie z.B. zuvor detektierte parkende Fahrzeuge. Dabei können seitliche Abstandssensoren 102 vorne oder hinten am Fahrzeug montiert werden. Bei einer vorderseitigen Montage des seitlichen Abstandsensors 102 kann während des Einparkens der seitliche Abstand zu einem vorderen Fahrzeug gemessen werden und eine Überprüfung, ob der Parklückenbeginn mit dem abgespeicherten Wissen über die Parldücke übereinstimmt, stattfinden. Bei einem hinteren Einbau ermöglicht der seitliche Abstandssensor 102 eine Abstandskontrolle zu den feststehenden Objekten, insbesondere beim Rückwärts-Einparken.

Der Heckabstandssensor 104 dient zur Absicherung gegen Kollisionen mit im Heckbereich des Fahrzeugs befindlichen Objekten, wie auch der Frontabstandssensor 106 zur Absicherung gegen Kollisionen mit im Frontbereich des Fahrzeugs befindlichen Objekten dient. Darüber hinaus dient der Frontabstandssensor 106 zur Erfassung eines vorderen Parldükkenendes bei einem seitlichen Einparken. Die Heck-, Front- oder seitlichen Abstandssensoren 102, 104, 106 dienen ferner auch zur Überprüfung der Soll-Strecke 1, um gegebenenfalls eine Neuberechnung der Soll-Strecke 1 zu veranlassen. Dies geschieht insbesondere dadurch, daß die Neuberechnung einer Soll-Strecke durch die Steuer- und/oder Regeleinrichtung 100 durchgeführt wird, wenn über die Sensoren 102, 104, 106 ein zu geringer Abstand zu einem Objekt detektiert wird, so daß eine Kollision mit diesem Objekt droht. In den Abstandssensoren 102, 104, 106 können eine Vielzahl von Techniken eingesetzt werden, beispielsweise können elektromagnetische Wellen, wie Mikrowellen, Millimeterwellen, Infrarotwellen und/oder Ultraschallwellen verwendet werden und/oder ein Radarelement, ein Sonarelement, ein Multisensorelement, ein Lidarelement (Laserradar) und/oder ein Photonic Mixing Device verwendet werden. Eine Montage der Sensoren 104, 106 kann insbesondere in einer Fahrzeughöhe in einem Bereich zwischen 30 und 40 cm erfolgen. Bei der Verwendung von Ultraschallwellen sollten Ultraschallsensoren eingesetzt werden, die eine hohe Abtastgeschwindigkeit aufweisen, um ein Vorbeifahren an einer Parklücke mit einer normalen Geschwindigkeit zu ermöglichen. Der Vorteil eines Photonic Mixing Devices liegt darin, daß ein tiefes Bild mit einer groben Raumwinkelrasterung z.B. 8x8 oder 16x16 erreicht werden kann. Eine Montage des Sensors 102 kann insbesondere in einer Fahrzeugshöhe in einem Bereich von 30 bis 100 cm erfolgen. Insbesondere kann eine Montage dieses Sensors 102 in einer Tür des Fahrzeugs erfolgen. Bei einem Photonic Mixing Device können auch andere Einbaupositionen verwendet werden.

Zumindest ein Längsbewegungsparameter, beispielsweise die Längsgeschwindigkeit, wird insbesondere über die Messung von einer Wegstrecke mittels über den Sensor 108 gemessenen Raddrehzahlen ermittelt. Die verschiedenen Wege und Geschwindigkeitssignale der einzelnen Räder werden anschließend auf den Fahrzeugbezugspunkt, beispielsweise einen Schwerpunkt des Fahrzeugs, projiziert, um die Fahrgeschwindigkeits- und Wegmessung (Odometrie) für das Fahrzeug zu ermöglichen. Es können aktive magnetostatische Raddrehzahlsensoren, insbesondere Permanentmagnetpolräder, wie sie in modernen ABS- und ESP-Systemen benutzt werden, verwendet werden.

Zumindest ein Querbewegungsparameter, beispielsweise der Lenkwinkel, kann über den Querbewegungsparametersensor 110, insbesondere in Form eines Ritzel-Sensors oder über einen lenksäulenmontierten Sensor, wie er bei ESP-Systemen verwendet wird, bestimmt werden. Damit werden über den Querbewegungsparametersensor 110 die aktuelle Lenkradposition und damit der aktuelle Lenkradwinkel bestimmt. Durch eine Differentiation der über den Sensor 110 gemessenen Werte mittels der Steuer- und/oder Regeleinrichtung 100 wird die aktuelle Lenkgeschwindigkeit bestimmt.

Um durch die Steuer- und/oder Regeleinrichtung 100 während des vollautomatischen Einparkvorganges der Erfindung die Längsbewegung, bzw. die Querbewegung des Fahrzeugs zu beeinflussen, wird über zumindest einen Lenkaktor 120, zumindest einen Bremsaktor 122 und/oder zumindest eine Antriebssteuerung 124 die Bewegung des Fahrzeugs geregelt. Es können als Lenkaktor 120 zur Einstellung des Radlenkwinkels verschiedene Vorrichtungen genutzt werden. So kann beispielsweise zumindest ein interner Momentensteller als Lenkaktor 120 eingesetzt werden. Damit ist gemeint, daß der Momentensteller beispielsweise als inhärente Funktion einer elektromagnetischen Lenkunterstützung in das Lenksystem des Fahrzeugs integriert wird. Es ist auch möglich, daß zumindest ein externer Momentensteller, beispielsweise bei hydraulischen Lenkunterstützungssystemen, eingesetzt wird. In diesem Fall kann der Lenkaktor 120 insbesondere zumindest einen Elektromotor umfassen, der über eine mechanische Verbindung, wie einen Riemenantrieb, mit einer Lenksäule des Fahrzeugs in Wirkverbindung steht. Ergänzend oder alternativ zu den zuvor beschriebenen Ausführungsformen des Lenkaktors 120 kann zumindest ein Winkelüberlagerungssteller mit einem geeigneten Getriebe verwendet werden, beispielsweise umfassend zumindest ein Planetengetriebe oder zumindest ein Harmonie Drive, der einen zusätzlichen Lenkwinkel einstellen kann. Dies bedeutet, daß über den Winkelüberlagerungssteller dem über das Lenkrad eingestellten Lenkwinkel ein zusätzlicher Winkel überlagert wird, so daß die Räder des Fahrzeugs um den zusätzlichen überlagerten Lenkwinkel ausgelenkt werden, ohne daß es zu einer Bewegung des Lenkrades kommt. Für eine derartige Winkelüberlagerung ist jedoch ein Abstützmoment durch den Fahrer an dem Lenkrad notwendig. Dagegen erfolgt bei der Verwendung eines internen oder externen Momentenstellers eine Mitführung des Lenkrads bei der Momentüberlagerung.

Um eine Steuerung bzw. Regelung des Längsbewegungsparameters des Fahrzeugs während eines Einparkvorgangs durchführen zu können, weist das Einparksystem 99 zumindest einen Bremsaktor 122 sowie vorzugsweise eine Antriebssteuerung 124 auf.

Mittels einer über die Steuer- und Regeleinrichtung 100 eingeleiteten automatischen Verzögerung durch den Bremsaktor 122 wird eine Veränderung der Längsbewegung des Fahrzeuges, insbesondere eine Verzögerung, also eine Verringerung der Längsbewegungsgeschwindigkeit des Fahrzeugs erzielt. Beispielsweise wird über zumindest eine elektrohydraulische Ansteuerung einer ESP-Hydraulik, zumindest einen Active Booster, d.h. einen elektronisch steuerbaren Bremskraftverstärker, der auch ohne eine Bremspedalbetätigung Druck aufbauen kann, zumindest eine elektrohydraulische Bremse und/oder über zumindest eine elektromechanische Bremse, der bzw. die vorzugsweise von dem Bremsaktor 122 umfaßt ist bzw. sind, eine Veränderung des Längsbewegungsparameters erreicht. Dadurch wird insbesondere erreicht, daß eine feinfühlige und gut dosierbare Ansteuerung mittels des Bremsaktors 122 erzielt werden kann und nur ein geringes Geräuschniveau vorliegt. Der Längsbewegungsparameter des Fahrzeugs kann ferner über eine Antriebssteuerung 124 verändert werden. Durch die Antriebssteuerung 124 wird die durch ein Antriebsaggregat des Fahrzeugs bereitgestellte Antriebsleistung zur Veränderung des Längsbewegungsparameters, insbesondere der Fahrzeuggeschwindigkeit, variiert. Dabei kann insbesondere die Antriebssteuerung 124 über eine elektronische Ottomotorsteuerung oder Diesehnotorsteuerung erreicht werden. Es kann auch auf zumindest eine Motorsteuerung verzichtet werden, wenn ein Kriechmoment bei einem Automatikgetriebe, insbesondere mit einer hydrodynamischen Kupplung, genutzt werden kann, daß genug Antriebsleistung für die Durchführung des Einparkvorganges bereitstellt, so daß der Längsbewegungsparameter ausschließlich über den Bremaktor 122 geregelt wird.

Die Regel- und/oder Steuereinrichtung 100 des Einparksystems 99 ist insbesondere als prediktiver Regler ausgestaltet. Dies bedeutet, daß ein durch das Einparksystem 99 durchgeführter Einparkvorgang anhand einer Soll-Strecke bzw. Solltrajektorie, die eine zukünftige Bewegung des Fahrzeugs beschreibt, durchgeführt wird. Dabei werden die über die Sensoren 102, 104, 106 aufgenommenen Meßwerte mittels einer Signalverarbeitung in ein Umfeldmodell umgesetzt. Aufgrund dieses Umfeldmodells wird eine Soll-Strecke bzw. Solltrajektorie bestimmt. Diese wird insbesondere als Prädiktionstrajektorie bezeichnet, da sie eine Vorhersage für eine zukünftige Bewegung des Fahrzeugs beinhaltet. Wie zuvor beschrieben, werden anhand dieser Soll-Strecke dann Sollwerte des Längsbewegungs- und des Querbewegungsparameters bestimmt, die dann zur Regelung des Einparkvorgangs verwendet werden. Anhand dieser berechneten Werte werden dann geeignete Signale an den Lenkaktor 120, den Bremsaktor 122 und/oder die Antriebssteuerung 124 weitergeleitet. Zur Regelung des Lenkaktors 120, des Bremsaktors 122 und/oder der Antriebssteuerung 124 werden dann die über die Sensoren 108, 110 gemessenen Werte mittels der Steuer- und/oder Regeleinrichtung 100 verarbeitet. Wie bereit zuvor beschrieben, kann die Soll-Strecke alternativ oder ergänzend durch über die Eingabeeinrichtung 112 eingegebene oder aus der Speichereinrichtung 114 ausgelesene Werte bestimmt bzw. ergänzt werden. Insbesondere kann alternativ oder ergänzend die Soll- Trajektorie mittels der Steuer-und/oder Regeleinrichtung 100, vorzugsweise in regelmäßigen Abständen, neu bestimmt werden. Dabei werden bevorzugt der Ist- Werte des Querbewegungsparameters und/oder des Längsbewegungsparameters und/oder die Position des Fahrzeugs als Ausgangswerte für die neu zu berechnende Soll- Trajektorie gewählt, wodurch, wie bereits erläutert wurde, eine Differenz zwischen dem Sollwert und dem Ist- Wert der jeweiligen Bewegungsparameter vermieden, zumindest reduziert wird.

In einer weiteren Ausführungsform des erfindungsgemäßen automatischen Einparksystems 99 wird nur der Längsbewegungsparameter des Fahrzeugs entlang einer Soll-Strecke 1 durch die Steuer- und/oder Regeleinrichtung 100 gesteuert bzw. geregelt. Dagegen wird der Querbewegungsparameter zumindest teilweise von einem Fahrer beeinflußt. In einem ersten Schritt wird dazu durch die Steuer- und/oder Regelungseinrichtung 100 eine Abweichung zwischen einem, wie in den zuvor beschriebenen Ausführungsformen berechnetem, Soll-Querbewegungsparameter, beispielsweise einem Soll-Lenkwinkel $\delta_{H,soll}$ (s), und einem aktuellen vom Fahrer beeinflußten Ist-Querbewegungsparameter, insbesondere einem Fahrer-Lenkwinkel $\delta_{H,Fahrer}$ (s), bestimmt. Wenn beispielsweise die Abweichung zwischen dem Soll-Querbewegungsparameter und dem Ist-Querbewegungsparameter einen vorherbestimmten Wert überschreitet, wird das Fahrzeug mittels des durch die Steuer- und/oder Regeleinrichtung 100 angesteuerten Bremsaktors 122 oder mittels der Antriebssteuerung 124 angehalten, und es wird abgewartet, bis die zuvor beschriebene Abweichung zwischen dem Soll-Querbewegungssparameter und dem Ist-Querbewegungsparameter einen Wert aufweist, der für eine Weiterfahrt akzeptabel ist. D.h. eine Bewegung des Fahrzeugs entlang der Soll-Strecke bzw. innerhalb vorbestimmter Grenzen um die Soll-Strecke herum ermöglicht. Auch kann zusätzlich oder alternativ vorgesehen sein, daß das Fahrzeug angehalten wird, wenn der Soll- Querbewegungsparameter einen vorbestimmten Wertebereich überschreitet. Dieser Wertebereich kann insbesondere ein durch das Fahrzeug vorgegebener Lenkwinkelbereich sein. Falls ein Anhalten des Fahrzeugs aus diesem Grund erfolgt, wird vorzugsweise zunächst eine Aufforderung an den Fahrer ausgegeben, insbesondere mittels einer Signaleinrichtung 126, das Fahrzeug zunächst in eine Richtung entgegen der durch die Soll-Trajektorie vorgegebene Richtung zu bewegen. Während dieser Bewegung erfolgt vorzugsweise eine Neuberechnung der Soll- Trajektorie. Sobald dann ein vorgegebener Wertebereich des Querbewegungsparameters bei einem Einparkvorgang entlang dieser neu berechneten Soll-Trajektorie einhaltbar ist, wird dem Fahrer signalisiert, daß der Einparkvorgang fortgesetzt werden kann. Zumindest eine Anzeigeelement bzw. die Signaleinrichtung 126, das bzw. die mit der Steuer- und/oder Regeleinrichtung in Wirkverbindung steht, dienen dazu, dem Fahrer einen Hinweis zu geben, in welche Richtung der Fahrer das Lenkrad drehen soll, um die Abweichung zwischen dem Soll-Querbewegungsparameter und dem Ist-Querbewegungsparameter zu verringern. In Übergangsbereichen, in denen eine große Lenkwinkeldifferenz eingestellt werden muß, beispielsweise bei einem Übergang von der ersten Kurve 5 in die zweite Kurve 7 in dem vierten Zeitabschnitt 36 der Figur 3, kann der Längsbewegungsparameter, insbesondere eine Längsgeschwindigkeit, auf einen Sollwert, insbesondere eine Soll-Längsgeschwindigkeit $_{vsoll}$, die gemäß der Formel

$$(3) \qquad v_{soll}(s) = \left| \left( \frac{\partial}{\partial s'} \delta_{H,soll}(s') \big|_s \right)^{-1} \cdot \dot{\delta}_{H,Fahrer} \right|$$

berechnet wird, geregelt werden. Ebenso wie in den zuvor beschriebenen Ausführungsformen des erfindungsgemäßen automatischen Einparksystems kann die Soll-Längsgeschwindigkeit $v_{soll}$ durch eine Maximal-Längsgeschwindigkeit begrenzt werden.

Durch die Berechnung der Soll-Längsgeschwindigkeit $v_{soll}$ gemäß der Formel (3) wird in dieser Ausführungsform auch bei einer hohen Dynamik des Querbewegungsparameters eine gute Übereinstimmung zwischen der Soll-Strecke und der Bewegung des Fahrzeugs erreicht, obwohl der Fahrer die Regelung des Querbewegungsparameters im wesentlichen vollständig übernimmt und somit eigentlich als Störgröße in die Regelung eingreift. Dies wird dadurch erreicht, daß die Bewegung des Fahrzeugs entlang der Soll-Strecke weiterhin automatisch erfolgt. So erfolgt eine Weiterbewegung des Fahrzeugs entlang der vorherbestimmten Soll-Strecke nur, wenn der Fahrer den entsprechenden Soll-Querbewegungsparameter einstellt. Ist dies nicht der Fall, wird der Einparkvorgang durch Veränderung des Längsbewegungsparameters, insbesondere der Fahrzeugsgeschwindigkeit verlangsamt bzw. unterbrochen, bis der Fahrer wieder den passenden Querbewegungsparameter eingestellt hat. Dadurch wird verhindert, daß das Fahrzeug von der Soll-Strecke abweicht und es wird sichergestellt, daß reproduzierbar ein gutes Einparkergebnis erzielt wird, obwohl nur eine Regelung der Längsbewegung des Fahrzeugs durchgeführt wird. Durch die Anpassung des Längsbewegungsparameters an die von dem Fahrer eingestellte Querbewegungsparametergröße wird auch bei einer hohen Dynamik der Längsbewegung eine gute Übereinstimmung zwischen der Soll-Strecke und dem von dem Fahrzeug zurücklegten Weg erreicht. Weiterhin kann vorgesehen sein, daß die Längsgeschwindigkeit des Fahrzeugs, wie zuvor erwähnt, durch eine maximale Längsgeschwindigkeit begrenzt wird und diese maximale Längsgeschwindigkeit während des Einparkvorgangs adaptiert wird. Insbesondere kann, wenn über die Sensoren 102, 104, 106 ein immer geringer werdender Abstand zu einem Objekt detektiert wird, die maximale Längsgeschwindigkeit immer weiter reduziert werden, also eine Annäherung des Fahrzeugs an ein Objekt berücksichtigt werden.

Die in der vorstehenden Beschreibung, den Ansprüche sowie den Zeichnungen offenbarten Merkmalen der Erfindung können sowohl einzeln, als auch in jeder beliebigen Kombination für die Verwirklichung der Erfindung in ihren verschiedenen Ausführungsformen wesentlich sein. Die Erfindung wird allein durch beigefügte Ansprüche definiert.

### *Bezugszeichenliste*

| | |
|---|---|
| 1 | Soll-Strecke |
| 2 | Startpunkt |
| 3 | Umkehrpunkt |
| 5 | Kurve |
| 6 | Punkt |
| 7 | Kurve |
| 8 | Punkt |
| 9 | Haltepunkt |
| 15 | Bereich |
| 17 | Bereich |
| 19 | Bereich |
| 20 | Graph |
| 22 | Graph |
| 24 | Graph |
| 26 | Graph |
| 30 | Zeitabschnitt |
| 32 | Zeitabschnitt |
| 34 | Zeitabschnitt |
| 36 | Zeitabschnitt |
| 99 | Einparksystem |
| 100 | Steuer- und/oder Regeleinrichtung |
| 102 | Abstandssensor |
| 104 | Abstandssensor |
| 106 | Abstandssensor |
| 108 | Längsbewegungsparametersensor |
| 110 | Querbewegungsparametersensor |
| 112 | Eingabeeinrichtung |
| 114 | Speichereinrichtung |
| 120 | Lenkaktor |

122 Bremsaktor
124 Antriebssteuerung
126 Signaleinrichtung

s        Bogenlänge
$s_2$, $s_3$, $s_6$, $s_8$, $s_9$    Bogenlänge

**Patentansprüche**

1. Verfahren zur automatischen Steuerung und/oder Regelung einer Bewegung eines Fahrzeuges während eines Einparkvorganges mittels eines Einparksystems, umfassend zumindest eine Steuer- und/oder Regeleinrichtung, wobei das Verfahren die folgenden Schritte umfaßt:

   - Festlegen einer Soll-Strecke, der von dem Fahrzeug während eines Einparkvorganges gefolgt werden soll;
   - Berechnen mittels der Steuer- und/oder Regeleinrichtung von zumindest einem Sollwert eines Längsbewegungsparameters in Abhängigkeit von zumindest einem Querbewegungsparameter und einer Position des Fahrzeugs entlang der Soll-Strecke, wobei der Längsbewegungsparameter eine Bewegungsgröße des Fahrzeugs im Wesentlichen entlang der Soll-Strecke und der Querbewegungsparameter eine Bewegungsgröße des Fahrzeugs zumindest teilweise in eine Richtung senkrecht zu der Soll-Strecke beschreibt; und
   - Vollautomatisches Steuern und/oder Regeln des Längsbewegungsparameters in Abhängigkeit von dem berechneten Sollwert des Längsbewegungsparameters mittels der Steuer- und/oder Regeleinrichtung, **dadurch gekennzeichnet, daß** der Sollwert des Längsbewegungsparameters zumindest zeitweise während des Einparkvorganges in Abhängigkeit von zumindest einer Ableitung des Querbewegungsparameters berechnet wird.

2. Verfahren nach Anspruch 1, **dadurch gekennzeichnet, daß**
zum Festlegen der Soll-Strecke mittels der Steuer- und/oder Regeleinrichtung die Soll-Strecke, insbesondere basierend auf Meßdaten zumindest eines mit dem Einparksystem in Wirkverbindung stehenden ersten Sensors, vorzugsweise von Meßdaten, die den Abstand des Fahrzeugs zu weiteren Objekten, wie Hindernissen und/oder weiteren Fahrzeugen repräsentieren, vor und/oder während des Einparkvorganges berechnet wird, die Soll-Strecke aus zumindest einer, vorzugsweise von dem Einparksystem umfaßten, Speichereinrichtung vor und/oder während des Einparkvorganges ausgelesen wird und/oder die Soll-Strecke mittels zumindest einer Eingabeeinrichtung in das Einparksystem vor und/oder während des Einparkvorganges eingegeben wird.

3. Verfahren nach Anspruch 1 oder 2, **dadurch gekennzeichnet, daß** der Längsbewegungsparameter zumindest eine Längsgeschwindigkeit v des Fahrzeugs, insbesondere entlang der Soll-Strecke, beschreibt und/oder der Querbewegungsparameter zumindest einen Lenkwinkel $\delta_H$ des Fahrzeugs und/oder einen Lenkwinkel eines Mittels zur Beeinflussung des Lenkwinkels des Fahrzeugs, wie einem Lenkrad, beschreibt.

4. Verfahren nach einem der vorangehenden Ansprüche, **dadurch gekennzeichnet, daß** der Sollwert des Längsbewegungsparameters, insbesondere die Soll-Längsgeschwindigkeit $v_{soll}$ des Fahrzeugs, zumindest zeitweise während des Einparkvorganges in Abhängigkeit von einem Sollwert des Querbewegungsparameters, vorzugsweise einem Soll-Lenkwinkel $\delta_{H,soll}$, berechnet wird.

5. Verfahren nach Anspruch 4, **dadurch gekennzeichnet, daß**
der Sollwert des Querbewegungsparameters, vorzugsweise der Soll-Lenkwinkel $\delta_{H,soll}$, insbesondere mittels der Steuer- und/oder Regeleinrichtung,
aus den Daten der Soll-Strecke berechnet wird,
basierend auf Meßdaten zumindest eines mit dem Einparksystem in Wirkverbindung stehenden zweiten Sensors, der insbesondere mit dem ersten Sensor identisch ist, vorzugsweise von Meßdaten, die den Abstand des Fahrzeugs von weiteren Objekten, wie Hindernissen und/oder weiteren Fahrzeugen repräsentieren, berechnet wird,
aus zumindest einer, vorzugsweise von dem Einparksystem umfaßten, Speichereinrichtung ausgelesen wird und/oder
mittels zumindest einer Eingabeeinrichtung in das Einparksystem eingegeben wird.

6. Verfahren nach einem der vorangehenden Ansprüche, **dadurch gekennzeichnet, daß** der Sollwert des Längsbewegungsparameters die Soll-Längsgeschwindigkeit $v_{soll}$ des Fahrzeugs ist, der Sollwert des Längsbewegungsparameters in Abhängigkeit von zumindest einer Ableitung des Sollwerts des Querbewegungsparameters berechnet wird und/oder die Ableitung des Querbewegungsparameters und/oder die Ableitung des Sollwerts des Querbewegungsparameters nach der Zeit erfolgt, wobei der Sollwert des Längsbewegungsparamters vorzugsweise basierend auf einer Lenkwinkelgeschwindigkeit $\dot{\delta}_H$ und/oder einer Soll-Lenkwinkelgeschwindigkeit $\dot{\delta}_{H,soll}$ berechnet wird.

7.  Verfahren nach einem der vorangehenden Ansprüche, **dadurch gekennzeichnet, daß** der Sollwert des Längsbewegungsparameters, insbesondere die Soll-Längsgeschwindigkeit $v_{soll}$ des Fahrzeugs, zumindest zeitweise während des Einparkvorganges in Abhängigkeit von, vorzugsweise umgekehrt proportional zu, einer örtlichen Ableitung des Querbewegungsparameters, vorzugsweise des Sollwerts des Querbewegungsparameters, entlang der Soll-Strecke berechnet wird.

8.  Verfahren nach einem der vorangehenden Ansprüche, **dadurch gekennzeichnet, daß** der Sollwert des Längsbewegungsparameters zumindest zeitweise während des Einparkvorganges in Abhängigkeit, vorzugsweise proportional, zu einem maximalen Querbewegungsparameter, insbesondere einer maximalen Lcnkwinkelgeschwindigkeit $\dot{\delta}_{H,max}$, berechnet wird.

9.  Verfahren nach Anspruch 8, **dadurch gekennzeichnet, daß**
    die Größe des maximalen Querbewegungsparameters im Laufe des Einparkvorganges verändert wird, insbesondere an die Annäherung des Fahrzeugs an ein Hindernis und/oder ein zeitliches Stadium des Einparkvorganges adaptiert wird, vorzugsweise der Querbewegungsparameter zu Beginn des Einparkvorganges geringer ist als während und/oder zum Ende des Einparkvorganges.

10. Verfahren nach einem Ansprüche 8 oder 9, **dadurch gekennzeichnet, daß** die Soll-Längsgeschwindigkeit des Fahrzeugs zumindest zeitweise während des Einparkvorganges gemäß

$$v_{soll}(s) = \left| \left( \frac{\partial}{\partial s'} \delta_{H,soll}(s') \big|_s \right)^{-1} \cdot \dot{\delta}_{H,max} \right| \quad \text{berechnet wird, wobei } \delta_{H,Soll}(s) \text{ ein Soll-Lenkwinkel an einer Position}$$

s, vorzugsweise einer Bogenlänge, des Fahrzeugs entlang der Soll-Strecke repräsentiert.

11. Verfahren nach einem der vorangehenden Ansprüche, **dadurch gekennzeichnet, daß** zumindest zeitweise während des Einparkvorgangs zumindest ein Sollwert einer zeitlichen Ableitung des Querbewegungsparameters, insbesondere eine Soll-Lenkwinkelgeschwindigkeit, in Abhängigkeit von dem Längsbewegungsparameter, vorzugsweise dem Sollwert des Längsbewegungsparameters, insbesondere der Geschwindigkeit v des Fahrzeugs, und/oder der Position s des Fahrzeugs entlang der Soll-Strecke, insbesondere gemäß

$$\dot{\delta}_{H,Soll}(s) = \frac{\partial}{\partial s'} \delta_{H,Soll}(s') \big|_s \cdot v, \quad \text{wobei } \delta_{H,soll}(s) \text{ ein Soll-Lenkwinkel an der Position s ist, berechnet wird.}$$

12. Verfahren nach einem der vorangehenden Ansprüche, **dadurch gekennzeichnet, daß** der Querbewegungsparameter zumindest zeitweise während des Einparkvorganges, vorzugsweise mittels der Steuer- und/oder Regeleinrichtung, insbesondere vollautomatisch, auf den Sollwert des Querbewegungsparameters, insbesondere den Soll-Lenkwinkel $\delta_{H,Soll}(s)$, und/oder den Sollwert der zeitlichen Ableitung des Querbewegungsparameters, insbesondere die Soll-Lenkwinkelgeschwindigkeit $\dot{\delta}_{H,Soll}(s)$, gesteuert und/oder geregelt wird.

13. Verfahren nach einem der Ansprüche 1 bis 7, **dadurch gekennzeichnet, daß** der Sollwert des Längsbewegungsparameters zumindest zeitweise während des Einparkvorganges in Abhängigkeit von, vorzugsweise proportional zu, einem durch einen Fahrer des Fahrzeugs vorgegebene Querbewegungsparameter, vorzugsweise einer durch einen Fahrer vorgegebenen Lenkwinkelgeschwindigkeit $\dot{\delta}_{H,Fahrer}$, berechnet wird, wobei der durch den Fahrer beeinflußte Querbewegungsparameter insbesondere mittels zumindest einer über zumindest einen dritten Sensor, wobei der dritte Sensor insbesondere identisch mit dem ersten und/oder zweiten Sensor ist, gemessenen Größe bestimmt wird.

14. Verfahren nach Anspruch 13, **dadurch gekennzeichnet, daß** die Soll-Längsgeschwindigkeit des Fahrzeugs zumindest zeitweise während des Einparkvorgangs gemäß $v_{soll}(s) = \left| \left( \frac{\partial}{\partial s'} \delta_{H,soll}(s') \big|_s \right)^{-1} \cdot \dot{\delta}_{H,Fahrer} \right|$ berech-

net wird, wobei $\delta_{H,Soll}$ (*s*) der Soll-Lenkwinkel an der Position s entlang der Soll-Strecke ist.

**15.** Verfahren nach einem der vorangehenden Ansprüche, **dadurch gekennzeichnet, daß** der Sollwert des Längsbewegungsparameters, zumindest zeitweise während des Einparkvorganges, in Abhängigkeit von zumindest einer Differenz zwischen einem Sollwert des Querbewegungsparameters, insbesondere dem Soll-Lenkwinkel, und einem Istwert des Querbewegungsparameters, insbesondere einem Ist-Lenkwinkel, der vorzugsweise durch den Fahrer vorgegeben wird, berechnet wird.

**16.** Verfahren nach Anspruch 15, **dadurch gekennzeichnet, daß**

der Sollwert des Längsbewegungsparameters in Abhängigkeit von der, insbesondere betragsmäßigen, Differenz zwischen dem Sollwert des Querbewegungsparameters und dem Istwert des Querbewegungsparameters berechnet wird, insbesondere der Sollwert des Längsbewegungsparameters mit zunehmender, insbesondere betragsmäßiger, Differenz zwischen dem Sollwert des Querbewegungsparameters und dem Istwert des Querbewegungsparameters monoton abnimmt, vorzugsweise der Längsbewegungsparameter auf Null reduziert wird, insbesondere das Fahrzeug angehalten wird, wenn die Differenz zwischen dem Sollwert des Querbewegungsparameters und dem Istwert des Querbewegungsparameters einen vorbestimmten Wert überschreitet und/oder der Sollwert des Querbewegungsparameters einen vorbestimmten Wertebereich, insbesondere einen maximalen Lenkwinkelbetrag des Fahrzeugs, überschreitet.

**17.** Verfahren nach Anspruch 16, **dadurch gekennzeichnet, daß** nach einem Anhalten des Fahrzeugs eine Aufforderung an den Fahrer ausgegeben wird, das Fahrzeug in eine Richtung entgegen einer durch die Soll- Trajektorie vorgegebenen Soll-Längsrichtung zu bewegen.

**18.** Verfahren nach einem der Ansprüche 15 bis 17, **dadurch gekennzeichnet, daß** einem Fahrer über zumindest eine, vorzugsweise visuelle, hörbare und/oder haptische Signaleinrichtung, insbesondere in Form eines Lautsprechers, eines haptisch aktiven Lenkrads und/oder zumindest einer visuellen Anzeige, eine Änderung des Querbewegungsparameters empfohlen wird, insbesondere eine empfohlene Drehrichtung eines Lenkrads signalisiert wird, um die Differenz zwischen dem Sollwert des Querbewegungsparameters, insbesondere dem Soll-Lenkwinkel, und dem Istwert des Querbewegungsparameters, insbesondere dem Ist-Lenkwinkel, zu reduzieren, und /oder dem Fahrer eine Anweisung zum Bewegen des Fahrzeugs entgegen der Soll-Längsrichtung der Soll-Trajektorie, insbesondere nach einem Anhalten des Fahrzeugs, angezeigt wird.

**19.** Verfahren nach einem der vorangehenden Ansprüche, **dadurch gekennzeichnet, daß** der Sollwert des Längsbewegungsparameters zumindest zeitweise während des Einparkvorganges zusätzlich in Abhängigkeit von zumindest einem Maximalwert des Längsbewegungsparameters, einer maximalen Längsbeschleunigung des Fahrzeugs, insbesondere entlang der Soll-Strecke, zumindest einer, insbesondere maximalen, Längsbeschleunigungsänderung des Fahrzeugs und/oder zumindest einem Abstand des Fahrzeugs von einem Hindernis, wie einem zweiten Fahrzeug oder einem feststehendem Hindernis, berechnet wird, insbesondere der Sollwert des Längsbewegungsparameters, wie die Soll-Längsgeschwindigkeit, durch den Maximalwert des Längsbewegungsparameters, insbesondere durch eine Maximallängsgeschwindigkeit $v_{max}$, begrenzt wird.

**20.** Verfahren nach einem der vorangehenden Ansprüche, **dadurch gekennzeichnet, daß** die Soll-Strecke während des Einparkvorganges und/oder nach einem Anhalten des Fahrzeugs, vorzugsweise unter Auswertung von Meßdaten des ersten, zweiten und/oder dritten Sensors, nachberechnet und/oder aktualisiert wird.

**21.** Automatisches Einparksystem für ein Fahrzeug umfassend zumindest eine Steuer-und/oder eine Regeleinrichtung (100), **dadurch gekennzeichnet, daß**

das Einparksystem (99), insbesondere die Steuer- und/oder Regeleinrichtung (100), zur Ausführung des Verfahrens nach einem der vorangehenden Ansprüche eingerichtet ist.

**22.** Automatisches Einparksystem nach Anspruch 21, **gekennzeichnet durch** zumindest einen mit der Steuer- und/ oder Regeleinrichtung (100) in Wirkverbindung stehenden, Sensor, vorzugsweise zumindest einen Abstandssensor (102, 104, 106), zumindest einen Sensor (108) zur Messung zumindest eines Längsbewegungsparameters des Fahrzeugs und/oder zumindest einen Sensor (110) zur Messung zumindest eines Querbewegungsparameters des Fahrzeugs.

**23.** Automatisches Einparksystem nach Anspruch 22, **dadurch gekennzeichnet, daß** mittels zumindest eines Seitenabstandssensors (102), vorzugsweise mittels zwei bis vier Seitenabstandssensoren, ein Abstand des Fahrzeugs zu zumindest einem, insbesondere im Bezug auf eine Soll-Strecke (1) des Fahrzeugs während eines Einparkvorganges, seitlich von dem Fahrzeug angeordneten Objekts, mittels zumindest eines Heckabstandssensors (104), vorzugsweise mittels vier Heckabstandssensoren, ein Abstand des Fahrzeugs zu zumindest einem im Bezug auf die Soll-Strecke (1) im Heckbereich des Fahrzeugs angeordneten Objekts und/oder mittels zumindest eines Frontabstandssensors (106), vorzugsweise mittels vier bis sechs Frontabstandssensoren, ein Abstand des Fahrzeugs zu zumindest einem im Bezug auf die Soll-Strecke (1) im Frontbereich des Fahrzeugs angeordneten Objekts bestimmbar ist.

**24.** Automatisches Einparksystem nach Anspruch 22 oder 23, **dadurch gekennzeichnet, daß** mittels der Meßwerte des Abstandssensors zumindest eine Soll-Strecke (1) des Fahrzeugs vor und/oder während eines Einparkvorganges, zumindest ein Sollwert und/oder zumindest ein Maximalwert des Längsbewegungsparameters des Fahrzeugs und/oder zumindest ein Sollwert und/oder zumindest ein Maximalwert des Querbewegungsparameters des Fahrzeugs, insbesondere mittels der Steuer- und/oder Regeleinrichtung (100), bestimmbar ist.

**25.** Automatisches Einparksystem nach einem der Ansprüche 22 bis 24, **dadurch gekennzeichnet, daß** der Abstandssensor (102, 104, 106) unter Einsatz elektromagnetischer Wellen, insbesondere von Mikrowellen-, mm-Wellen-, Infrarot- und/oder Ultraschallstrahlung einen Abstand bestimmt und/oder zumindest ein Radarelement, zumindest ein Lidarelement, zumindest ein Sonarelement, zumindest ein Multisensorelement und/oder zumindest ein Photonic Mixing Device umfaßt.

**26.** Automatisches Einparksystem nach einem der Ansprüche 22 bis 25, **dadurch gekennzeichnet, daß** der Sensor zur Messung des Längsbewegungsparameters zumindest ein Odometer und/oder zumindest einen Raddrehzahlsensor umfaßt, vorzugsweise zumindest einen aktiven magnetostatischen Raddrehzahlsensor, insbesondere umfaßt von einem ABS-und/oder ESP-System des Fahrzeugs.

**27.** Automatisches Einparksystem nach einem der Ansprüche 22 bis 26, **dadurch gekennzeichnet, daß** der Sensor (110) zur Messung des Querbewegungsparameters zumindest einen Lenksäulen- bzw. Ritzelsensor in Wirkverbindung mit einem Lenksystem des Fahrzeugs, vorzugsweise einem Lenkrad, einer Lenksäule und/oder einem Lenkgestänge des Fahrzeugs, umfaßt, wobei der Sensor (110) zur Messung des Querbewegungsparameters vorzugsweise zumindest einen magnetischen Aufnehmer umfaßt und/oder von einem ABS- und/oder ESP-System des Fahrzeugs umfaßt ist.

**28.** Automatisches Einparksystem nach einem der Ansprüche 21 bis 27, **gekennzeichnet durch** zumindest einen Aktor (120, 122, 124) zur Beeinflussung des Längsbewegungsparameters und/oder des Querbewegungsparameters des Fahrzeugs, wobei insbesondere mittels des Aktors (120, 122, 124) der Längsbewegungsparameter, vorzugsweise auf einen Sollwert, und/oder der Querbewegungsparameter, vorzugsweise auf einen Sollwert, steuer- und/oder regelbar ist.

**29.** Automatisches Einparksystem nach Anspruch 28, **dadurch gekennzeichnet, daß** mittels zumindest eines Lenkaktors (120) zumindest ein Lenkwinkel des Fahrzeugs beeinflußbar ist, wobei der Lenkaktor (120) vorzugsweise zumindest einen Momentsteller, insbesondere als inhärente Funktion einer, vorzugsweise elektromechanischen, Lenkunterstützung in das Lenksystem des Fahrzeugs integriert und/oder als externer Momentensteller, wie als separater Motor, in ein, vorzugsweise hydraulisches, Lenkunterstützungssystem integriert, und/oder zumindest einen Winkelüberlagerungssteller, der insbesondere mittels zumindest eines Getriebes, wie einem Planetengetriebe oder einem Harmonic Drive, mit dem Lenksystem des Fahrzeugs in Wirkverbindung steht, umfaßt.

**30.** Automatisches Einparksystem nach Anspruch 28 oder 29, **dadurch gekennzeichnet, daß** mittels zumindest eines Bremsaktors (122) der Längsbewegungsparameter, vorzugsweise zumindest eine Längsgeschwindigkeit des Fahrzeugs beeinflußbar ist, wobei der Bremsaktor (122) vorzugsweise zumindest eine elektrohydraulische und/oder elektromechanische Bremse und/oder einen elektronisch steuerbaren Bremskraftverstärker umfaßt und/oder über den Bremsaktor (122) in eine, vorzugsweise elektrohydraulische, Bremsansteuerung eines ESP- und/oder ABS-Systems des Fahrzeugs eingreifbar ist.

**31.** Automatisches Einparksystem nach einem der Ansprüche 28 bis 30, **dadurch gekennzeichnet, daß** der Aktor zumindest eine Antriebssteuerung (124) zur Beeinflussung der Antriebsleistung zumindest eines Antriebaggregats des Fahrzeugs, wie einem Verbrennungsmotor, umfaßt.

**32.** Automatisches Einparksystem nach einem der Ansprüche 21 bis 31, **gekennzeichnet durch**
zumindest eine Speichereinrichtung (114) in Wirkverbindung mit der Steuer- und/oder Regeleinrichtung (100), wobei mittels der Speichereinrichtung (114) vorzugsweise zumindest eine Soll-Strecke (1), zumindest ein Sollwert des Längsbewegungsparameters und/oder zumindest ein Sollwert des Querbewegungsparameters speicherbar ist bzw. sind.

**33.** Automatisches Einparksystem nach einem der Ansprüche 21 bis 32, **gekennzeichnet durch**
zumindest eine Eingabeeinrichtung (112) in Wirkverbindung mit der Steuer- und/oder Regeleinrichtung (100), wobei mittels der Eingabeeinrichtung (112) vorzugsweise zumindest eine Soll-Strecke (1), zumindest ein Sollwert des Längsbewegungsparameters und/oder zumindest ein Sollwert des Querbewegungsparameters in das Einparksystem (99) eingebbar ist und/oder die Eingabeeinrichtung (112) zumindest eine Einzeltaste, zumindest einen Drehstufenschalter, zumindest eine Tastatur, zumindest eine Spracheingabeeinrichtung und/oder zumindest einen Touchscreen umfaßt.

**34.** Automatisches Einparksystem nach einem der Ansprüche 21 bis 33, **gekennzeichnet, durch**
zumindest eine Signaleinrichtung (126) in Wirkverbindung mit der Steuer- und/oder Regeleinrichtung (100), wobei vorzugsweise mittels der Signaleinrichtung (126) dem Fahrer des Fahrzeugs visuelle, haptische und/oder hörbare Anweisungen zur Einstellung zumindest eines Querbewegungsparameters signalisierbar sind und/oder die Signaleinrichtung zumindest ein Display, zumindest einen Sitzvibrator, zumindest ein haptisch aktives Pedal und/oder zumindest einen Lautsprecher umfaßt.

**Claims**

**1.** Method for automatically performing open-loop and/or closed-loop control of a movement of a vehicle during a parking process by means of a parking system, comprising at least one open-loop and/or closed-loop control device, wherein the method comprises the following steps:

- definition of a reference path which is to be followed by the vehicle during a parking process;
- calculation of at least one reference value of a longitudinal movement parameter depending on at least one lateral movement parameter and a position of the vehicle along the reference path by means of the open-loop and/or closed-loop control device, wherein the longitudinal movement parameter describes a movement variable of the vehicle essentially along the reference path, and the lateral movement parameter describes a movement variable of the vehicle at least partially in a direction perpendicular to the reference path; and
- fully automatic open-loop and closed-loop control of the longitudinal movement parameter depending on the calculated reference value of the longitudinal movement parameter by means of the open-loop and/or closed-loop control device,

**characterized in that**
the reference value of the longitudinal movement parameter is calculated at least temporarily during the parking process depending on at least a derivation of the lateral movement parameter.

**2.** Method according to Claim 1, **characterized in that**,
in order to define the reference path by means of the open-loop and/or closed-loop control device, the reference path is calculated before and/or during the parking process, in particular on the basis of measurement data of at least one first sensor which is operatively connected to the parking system, preferably measurement data which represents the distance of the vehicle from further objects, such as obstacles and/or further vehicles, the reference path is read out before and/or during the parking process from at least one storage device, preferably comprised by the parking system, and/or the reference path is input before and/or during the parking process into the parking system by means of at least one input device.

**3.** Method according to Claim 1 or 2, **characterized in that**
the longitudinal movement parameter describes at least a longitudinal velocity v of the vehicle, in particular along the reference path, and/or the lateral movement parameter describes at least a steering angle $\delta_H$ of the vehicle and/or a steering angle of a means for influencing the steering angle of the vehicle, such as a steering wheel.

**4.** Method according to one of the preceding claims,
**characterized in that**

the reference value of the longitudinal movement parameter, in particular the reference longitudinal velocity $v_{soll}$ of the vehicle, is calculated at least temporarily during the parking process depending on a reference value of the lateral movement parameter, preferably a reference steering angle $\delta_{H,soll}$.

5. Method according to Claim 4, **characterized in that** the reference value of the lateral movement parameter, preferably the reference steering angle $\delta_{H,soll}$ is calculated, in particular by means of the open-loop and/or closed-loop control device, from the data relating to the reference path, on the basis of measurement data of at least one second sensor which is operatively connected to the parking system and which is in particular identical to the first sensor, preferably measurement data which represents the distance of the vehicle from further objects, such as obstacles and/or further vehicles, is read out from at least one storage device, which is preferably comprised by the parking system, and/or is input into the parking system by means of at least one input device.

6. Method according to one of the preceding claims,
   **characterized in that**
   the reference value of the longitudinal movement parameter is the reference longitudinal velocity $v_{soll}$ of the vehicle, the reference value of the longitudinal movement parameter is calculated depending on at least one derivation of the reference value of the lateral movement parameter and/or the derivation of the lateral movement parameter and/or the derivation of the reference value of the lateral movement parameter are/is carried out over time, wherein the reference value of the longitudinal movement parameter is preferably calculated on the basis of a steering angle speed $\dot{\delta}_H$ and/or a reference steering angle speed $\dot{\delta}_{H,soll}$.

7. Method according to one of the preceding claims,
   **characterized in that**
   the reference value of the longitudinal movement parameter, in particular the reference longitudinal velocity $v_{soll}$ of the vehicle is calculated at least temporarily during the parking process depending on, and preferably in inverse proportion to, a local derivation of the lateral movement parameter, preferably the reference value of the lateral movement parameter, along the reference path.

8. Method according to one of the preceding claims,
   **characterized in that**
   the reference value of the longitudinal movement parameter is calculated at least temporarily during the parking process depending on, preferably in proportion to, a maximum lateral movement parameter, in particular a maximum steering angle speed $\dot{\delta}_{H,max}$.

9. Method according to Claim 8, **characterized in that** the magnitude of the maximum lateral movement parameter is changed in the course of the parking process, in particular is adapted to the approach of the vehicle to an obstacle and/or a timing stage of the parking process, preferably the lateral movement parameter is lower at the start of the parking process than during the parking process and/or at the end of the parking process.

10. Method according to one of Claims 8 or 9,
    **characterized in that**
    the reference longitudinal velocity of the vehicle is calculated at least temporarily during the parking process according

to $v_{soll}(s) = \left| \left( \frac{\partial}{\partial s'} \delta_{H,soll}(s') \big|_s \right)^{-1} \cdot \dot{\delta}_{H,max} \right|$ , wherein $\delta_{H,soll}$ represents a reference steering angle at a position s, preferably an arc length of the vehicle along the reference path.

11. Method according to one of the preceding claims, **characterized in that**
    at least temporarily during the parking process at least one reference value of a derivation of the lateral movement parameter over time, in particular a reference steering angle speed, is calculated depending on the longitudinal movement parameter, preferably the reference value of the longitudinal movement parameter, in particular the velocity v of the vehicle and/or the position s of the vehicle along the reference path, in particular according to

$\dot{\delta}_{H,soll}(s) = \frac{\partial}{\partial s'} \delta_{H,soll}(s') \big|_s \cdot v$ , where $\delta_{H,soll}(s)$ is a reference steering angle at the position s.

12. Method according to one of the preceding claims, **characterized in that**

open-loop and/or closed-loop control of the lateral movement parameter is applied at least temporarily during the parking process, preferably by means of the open-loop and/or closed-loop control device, in particular fully automatically, to the reference value of the lateral movement parameter, in particular to the reference steering angle $\delta_{H,soll}(s)$, and/or to the reference value of the derivation of the lateral movement parameter over time, in particular to the reference steering angle speed $\dot{\delta}_{H,soll}(s)$.

13. Method according to one of Claims 1 to 7, **characterized in that**
the reference value of the longitudinal movement parameter is calculated at least temporarily during the parking process depending on, preferably in proportion to, a lateral movement parameter which is predefined by a driver of the vehicle, preferably a steering angle speed $\delta_{H,Fahrer}$ which is predefined by a driver, wherein the lateral movement parameter which is influenced by the driver is determined, in particular, by means of at least one variable which is measured by means of at least a third sensor, wherein the third sensor is in particular identical to the first and/or second sensor.

14. Method according to Claim 13, **characterized in that** the reference longitudinal velocity of the vehicle is calculated at least temporarily during the parking process according to $v_{soll}(s) = \left| \left( \frac{\partial}{\partial s'} \delta_{H,soll}(s') \Big|_s \right)^{-1} \cdot \dot{\delta}_{H,Fahrer} \right|$, where-

in $\delta_{H,soll}(s)$ is the reference steering angle at the position s along the reference path.

15. Method according to one of the preceding claims, **characterized in that**
the reference value of the longitudinal movement parameter is calculated, at least temporarily during the parking process, depending on at least one difference between a reference value of the lateral movement parameter, in particular the reference steering angle, and an actual value of the lateral movement parameter, in particular an actual steering angle, which is preferably predefined by the driver.

16. Method according to Claim 15, **characterized in that**
the reference value of the longitudinal movement parameter is calculated depending on the difference, in particular in terms of absolute value, between the reference value of the lateral movement parameter and the actual value of the lateral movement parameter, in particular the reference value of the longitudinal movement parameter decreases monotonously as the difference increases, in particular in terms of absolute value, between the reference value of the lateral movement parameter and the actual value of the lateral movement parameter, and preferably the longitudinal movement parameter is reduced to zero, and in particular the vehicle is stopped, if the difference between the reference value of the lateral movement parameter and the actual value of the lateral movement parameter exceeds a predetermined value and/or the reference value of the lateral movement parameter exceeds a predetermined value range, in particular a maximum steering-angle absolute value of the vehicle.

17. Method according to Claim 16, **characterized in that**,
after the vehicle stops, a request is issued to the driver to move the vehicle in a direction counter to a reference longitudinal direction which is predefined by the reference trajectory.

18. Method according to one of Claims 15 to 17,
**characterized in that**,
by means of at least one, preferably visual, audible and/or haptic signal device, in particular in the form of a loudspeaker, a haptically active steering wheel and/or at least a visual display, a change in the lateral movement parameter is recommended to a driver, in particular a recommended direction of rotation of a steering wheel is signalled in order to reduce the difference between the reference value of the lateral movement parameter, in particular the reference steering angle, and the actual value of the lateral movement parameter, in particular the actual steering angle, and/or an instruction to move the vehicle counter to the reference longitudinal direction of the reference trajectory is displayed to the driver, in particular after the vehicle stops.

19. Method according to one of the preceding claims, **characterized in that**
the reference value of the longitudinal movement parameter is additionally calculated at least temporarily during the parking process depending on at least a maximum value of the longitudinal movement parameter, a maximum longitudinal acceleration of the vehicle, in particular along the reference path, at least one, in particular maximum, change in longitudinal acceleration of the vehicle and/or at least a distance of the vehicle from an obstacle, such as a second vehicle or a fixed obstacle, in particular the reference value of the longitudinal movement parameter, such as the reference longitudinal velocity, is limited by the maximum value of the longitudinal movement parameter, in particular by a maximum longitudinal velocity $v_{max}$.

20. Method according to one of the preceding claims, **characterized in that**
the reference path is recalculated and/or updated during the parking process and/or after the vehicle stops, preferably by evaluating measurement data of the first, second and/or third sensor.

21. Automatic parking system for a vehicle comprising at least one open-loop and/or closed-loop control device (100), **characterized in that**
the parking system (99), in particular the open-loop and/or closed-loop control device (100), is designed to carry out the method according to one of the preceding claims.

22. Automatic parking system according to Claim 21, **characterized by**
at least one sensor which is operatively connected to the open-loop and/or closed-loop control device (100), preferably at least one distance sensor (102, 104, 106), at least one sensor (108) for measuring at least one longitudinal movement parameter of the vehicle and/or at least one sensor (110) for measuring at least one lateral movement parameter of the vehicle.

23. Automatic parking system according to Claim 22, **characterized in that**
a distance of the vehicle from at least one object which is arranged to the side of the vehicle, in particular with respect to a reference path (1) of the vehicle during a parking process, can be determined by means of at least one lateral distance sensor (102), preferably by means of two to four lateral distance sensors,
a distance of the vehicle from at least one object which is arranged to the rear of the vehicle with respect to the reference path (1) can be determined by means of at least one rear distance sensor (104), preferably by means of four rear distance sensors, and/or
a distance of the vehicle from at least one object which is arranged to the front of the vehicle with respect to the reference path (1) can be determined by means of at least one front distance sensor (106), preferably by means of four to six front distance sensors.

24. Automatic parking system according to Claim 22 or 23, **characterized in that**
at least one reference path (1) of the vehicle before and/or during a parking process, at least one reference value and/or at least one maximum value of the longitudinal movement parameter of the vehicle and/or at least one reference value and/or at least one maximum value of the lateral movement parameter of the vehicle can be determined by means of the measured values of the distance sensor, in particular by means of the open-loop and/or closed-loop control device (100).

25. Automatic parking system according to one of Claims 22 to 24, **characterized in that**
the distance sensor (102, 104, 106) determines a distance using electromagnetic waves, in particular microwaves, mm waves, infrared radiation and/or ultrasonic sound radiation and/or comprises at least one radar element, at least one lidar element, at least one sonar element, at least one multi-sensor element and/or at least one photonic mixing device.

26. Automatic parking system according to one of Claims 22 to 25, **characterized in that**
the sensor for measuring the longitudinal movement parameter comprises at least one odometer and/or at least one wheel speed sensor, preferably at least one active magnetostatic wheel speed sensor, which, in particular, forms part of an ABS and/or ESP system of the vehicle.

27. Automatic parking system according to one of Claims 22 to 26, **characterized in that**
the sensor (110) for measuring the lateral movement parameter comprises at least one steering column sensor or pinion sensor which is operatively connected to a steering system of the vehicle, preferably a steering wheel, a steering column and/or steering gear of the vehicle, wherein the sensor (110) for measuring the lateral movement parameter preferably comprises at least one magnetic pick-up and/or forms part of an ABS and/or ESP system of the vehicle.

28. Automatic parking system according to one of Claims 21 to 27, **characterized by**
at least one actuator (120, 122, 124) for influencing the longitudinal movement parameter and/or the lateral movement parameter of the vehicle, wherein, in particular by means of the actuator (120, 122, 124), open-loop and/or closed-loop control can be performed on the longitudinal movement parameter, preferably to a reference value, and/or open-loop and/or closed-loop control can be performed on the lateral movement parameter, preferably to a reference value.

29. Automatic parking system according to Claim 28, **characterized in that**
at least one steering angle of the vehicle can be influenced by means of at least one steering actuator (120), wherein the steering actuator (120) preferably integrates at least one torque adjustor into the steering system of the vehicle, in particular as an inherent function of a, preferably electromechanical, steering assistance system, and/or as an external torque adjustor, such as a separate motor, into a, preferably hydraulic, steering assistance system, and/or comprises at least one angle superimposition adjustor which is operatively connected to the steering system of the vehicle, in particular by means of at least one gear mechanism, such as a planetary gear mechanism or a harmonic drive.

30. Automatic parking system according to Claim 28 or 29, **characterized in that**
the longitudinal movement parameter, preferably at least one longitudinal velocity of the vehicle, can be influenced by means of at least one brake actuator (122), wherein the brake actuator (122) preferably comprises at least one electrohydraulic and/or electromechanical brake and/or an electronically open-loop controllable brake booster and/or can engage in a, preferably electrohydraulic, brake actuation system of an ESP and/or ABS system of the vehicle via the brake actuator (122).

31. Automatic parking system according to one of Claims 28 to 30, **characterized in that**
the actuator comprises at least one drive controller (124) for influencing the drive power of at least one drive assembly of the vehicle, such as an internal combustion engine.

32. Automatic parking system according to one of Claims 21 to 31, **characterized by**
at least one storage device (114) which is operatively connected to the open-loop and/or closed-loop control device (100), wherein preferably at least one reference path (1), at least one reference value of the longitudinal movement parameter and/or at least one reference value of the lateral movement parameter can be stored by means of the storage device (114).

33. Automatic parking system according to one of Claims 21 to 32, **characterized by**
at least one input device (112) which is operatively connected to the open-loop and/or closed-loop control device (100), wherein preferably at least one reference path (1), at least one reference value of the longitudinal movement parameter and/or at least one reference value of the lateral movement parameter can be input into the parking system (99) by means of the input device (112), and/or the input device (112) comprises at least one individual key, at least one three-stage switch, at least one keyboard, at least one voice input device and/or at least one touch screen.

34. Automatic parking system according to one of Claims 21 to 33, **characterized by**
at least one signal device (126) which is operatively connected to the open-loop and/or closed-loop control device (100), wherein visual, haptic and/or audible instructions for setting at least one lateral movement parameter can preferably be signalled to the driver of the vehicle by means of the signal device (126), and/or the signal device comprises at least one display, at least one seat vibrator, at least one haptically active pedal and/or at least one loudspeaker.

**Revendications**

1. Procédé de commande et/ou régulation automatique d'un mouvement d'un véhicule pendant une manoeuvre de stationnement grâce à un système de stationnement, comprenant au moins un dispositif de commande et/ou régulation, le procédé comportant les étapes suivantes consistant à :

   - déterminer un trajet Soll qui doit être suivi par le véhicule pendant une manoeuvre de stationnement ;
   - calculer grâce au dispositif de commande et/ou régulation au moins une valeur Soll d'un paramètre de mouvement longitudinal en fonction d'au moins un paramètre de mouvement transversal et d'une position du véhicule le long du trajet Soll, le paramètre de mouvement longitudinal décrivant une quantité de mouvement du véhicule essentiellement le long du trajet Soll et le paramètre de mouvement transversal décrivant une quantité de mouvement du véhicule au moins partiellement dans une direction perpendiculaire au trajet Soll ; et
   - commander et/ou réguler de manière complètement automatique le paramètre de mouvement longitudinal en fonction de la valeur Soll calculée du paramètre de mouvement longitudinal grâce au dispositif de commande et/ou régulation, **caractérisé en ce que** la valeur Soll du paramètre de mouvement longitudinal est calculée au moins temporairement pendant la manoeuvre de stationnement en fonction d'au moins une dérivée du paramètre de mouvement transversal.

2. Procédé selon la revendication 1, **caractérisé en ce que**
pour la détermination du trajet Soll grâce au dispositif de commande et/ou régulation, le trajet Soll est calculé avant et/ou pendant la manoeuvre de stationnement, en particulier en se basant sur des données de mesure d'au moins un premier capteur coopérant avec le système de stationnement, de préférence de données de mesure qui représentent la distance du véhicule par rapport à d'autres objets, comme des obstacles et/ou d'autres véhicules, le trajet Soll est extrait avant et/ou pendant la manoeuvre de stationnement à partir d'au moins un dispositif de mémorisation, de préférence intégré au système de stationnement et/ou le trajet Soll est entré avant et/ou pendant la manoeuvre de stationnement grâce à au moins un dispositif d'entrée du système de stationnement.

3. Procédé selon la revendication 1 ou 2, **caractérisé en ce que**
le paramètre de mouvement longitudinal décrit au moins une vitesse longitudinale v du véhicule, en particulier le long du trajet Soll et/ou le paramètre de mouvement transversal décrit au moins un angle de braquage $\delta_H$ du véhicule et/ou un angle de braquage d'un moyen destiné à influencer l'angle de braquage du véhicule, comme un volant.

4. Procédé selon l'une quelconque des revendications précédentes, **caractérisé en ce que** la valeur Soll du paramètre de mouvement longitudinal, en particulier la vitesse longitudinale Soll $v_{soll}$ du véhicule, est calculée au moins temporairement pendant la manoeuvre de stationnement en fonction d'une valeur Soll du paramètre de mouvement transversal, de préférence un angle de braquage Soll $\delta_{H,soll}$.

5. Procédé selon la revendication 4, **caractérisé en ce que**
la valeur Soll du paramètre de mouvement transversal, de préférence l'angle de braquage Soll $\delta_{H,\,soll}$, en particulier grâce au dispositif de commande et/ou régulation
est calculée à partir des données du trajet Soll,
est calculée en se basant sur des données de mesure d'au moins un second capteur coopérant avec le système de stationnement, qui est en particulier identique au premier capteur, de préférence des données de mesure, qui représentent la distance du véhicule par rapport à d'autres objets, comme des obstacles et/ou d'autres véhicules, est extraite d'au moins un dispositif de mémorisation, de préférence intégré au système de stationnement et/ou est entrée dans le système de stationnement grâce à au moins un dispositif d'entrée.

6. Procédé selon l'une quelconque des revendications précédentes,
**caractérisé en ce que**
la valeur Soll du paramètre de mouvement longitudinal est la vitesse longitudinale Soll $v_{soll}$ du véhicule, la valeur Soll du paramètre de mouvement longitudinal est calculée en fonction d'au moins une dérivée de la valeur Soll du paramètre de mouvement transversal et/ou la dérivée du paramètre de mouvement transversal et/ou la dérivée de la valeur Soll du paramètre de mouvement transversal a lieu par rapport au temps, la valeur Soll du paramètre de mouvement longitudinal étant calculée de préférence en se basant sur une vitesse d'angle de braquage $\dot{\delta}_H$ et/ou une vitesse d'angle de braquage Soll $\delta_{H,\,soll}$.

7. Procédé selon l'une quelconque des revendications précédentes,
**caractérisé en ce que**
la valeur Soll du paramètre de mouvement longitudinal, en particulier la vitesse longitudinale Soll $v_{soll}$ du véhicule, est calculée au moins temporairement pendant la manoeuvre de stationnement en fonction de, et de préférence de manière inversement proportionnelle à, une dérivée locale du paramètre de mouvement transversal, et de préférence de la valeur Soll du paramètre de mouvement transversal, le long du trajet Soll.

8. Procédé selon l'une quelconque des revendications précédentes,
**caractérisé en ce que**
la valeur Soll du paramètre de mouvement longitudinal est calculée au moins temporairement pendant la manoeuvre de stationnement en fonction de, et de préférence de manière proportionnelle à, un paramètre de mouvement transversal maximal, en particulier d'une vitesse d'angle de braquage maximale $\dot{\delta}_{H,\,max}$.

9. Procédé selon la revendication 8, **caractérisé en ce que**
la taille du paramètre de mouvement transversal maximal est modifiée au cours de la manoeuvre de stationnement, en particulier est adaptée à l'approche du véhicule au niveau d'un obstacle et/ou d'un stade temporel de la manoeuvre de stationnement, et le paramètre de mouvement transversal au début de la manoeuvre de stationnement est de préférence plus faible que pendant et/ou à la fin de la manoeuvre de stationnement.

**10.** Procédé selon l'une des revendications 8 ou 9, **caractérisé en ce que**
la vitesse longitudinale Soll du véhicule est calculée au moins temporairement pendant la manoeuvre de stationnement selon

$$V_{soll}(s) = \left| \left( \frac{\partial}{\partial s'} \delta_{H,soll}(s') \Big|_{s} \right)^{-1} \cdot \dot{\delta}_{H,max} \right| ,$$

$\delta_{H\,soll}(s)$ représentant un angle de braquage Soll au niveau d'une position s, de préférence d'une longueur d'arc, du véhicule le long du trajet Soll.

**11.** Procédé selon l'une quelconque des revendications précédentes,
**caractérisé en ce que**
au moins temporairement pendant la manoeuvre de stationnement, au moins une valeur Soll d'une dérivée temporelle du paramètre de mouvement transversal, en particulier une vitesse d'angle de braquage Soll, est calculée en fonction du paramètre de mouvement longitudinal, de préférence en fonction de la valeur Soll du paramètre de mouvement longitudinal, en particulier de la vitesse v du véhicule, et/ou de la position s du véhicule le long du trajet Soll, en particulier selon $\dot{\delta}_{H,soll}(s) = \frac{\partial}{\partial s'} \delta_{H,soll}(s') \Big|_{s} \cdot v$, $\delta_{H,soll}(s)$ étant un angle de braquage Soll au niveau de la position s.

**12.** Procédé selon l'une quelconque des revendications précédentes,
**caractérisé en ce que**
le paramètre de mouvement transversal est commandé et/ou régulé au moins temporairement pendant la manoeuvre de stationnement, de préférence grâce au dispositif de commande et/ou régulation, en particulier de manière complètement automatique, par la valeur Soll du paramètre de mouvement transversal, en particulier l'angle de braquage Soll $\delta_{H,soll}(s)$, et/ou la valeur Soll de la dérivée temporelle du paramètre de mouvement transversal, en particulier la vitesse d'angle de braquage Soll $\dot{\delta}_{H,soll}(s)$.

**13.** Procédé selon l'une quelconque des revendications 1 à 7, **caractérisé en ce que**
la valeur Soll du paramètre de mouvement longitudinal est calculée au moins temporairement pendant la manoeuvre de stationnement en fonction de, et de préférence de manière proportionnelle à, un paramètre de mouvement transversal spécifié par un conducteur du véhicule, de préférence une vitesse d'angle de braquage $\dot{\delta}_{H,Fahrer}$ spécifiée par un conducteur, le paramètre de mouvement transversal influencé par le conducteur étant déterminé en particulier grâce à au moins une grandeur mesurée par l'intermédiaire d'au moins un troisième capteur, le troisième capteur étant en particulier identique au premier et/ou deuxième capteur.

**14.** Procédé selon la revendication 13, **caractérisé en ce que**
la vitesse longitudinale Soll du véhicule est calculée au moins temporairement pendant la manoeuvre de station-

nement selon $V_{soll}(s) = \left| \left( \frac{\partial}{\partial s'} \delta_{H,soll}(s') \Big|_{s} \right)^{-1} \cdot \dot{\delta}_{H,Fahrer} \right|$, $\delta_{H,soll}(s)$ étant l'angle de braquage Soll au niveau de la position s le long du trajet Soll.

**15.** Procédé selon l'une quelconque des revendications précédentes,
**caractérisé en ce que**
la valeur Soll du paramètre de mouvement longitudinal est calculée, au moins temporairement pendant la manoeuvre de stationnement, en fonction d'au moins une différence entre une valeur Soll du paramètre de mouvement transversal, en particulier l'angle de braquage Soll, et une valeur Ist du paramètre de mouvement transversal, en particulier un angle de braquage Ist, qui est spécifié de préférence par le conducteur.

**16.** Procédé selon la revendication 15, **caractérisé en ce que**

la valeur Soll du paramètre de mouvement longitudinal est calculée en fonction de la différence, en particulier de sa valeur, entre la valeur Soll du paramètre de mouvement transversal et la valeur Ist du paramètre de mouvement transversal, la valeur Soll du paramètre de mouvement longitudinal décroît en particulier de manière monotone avec l'augmentation de la différence, en particulier de sa valeur, entre la valeur Soll du paramètre de mouvement transversal et la valeur Ist du paramètre de mouvement transversal, le paramètre de mouvement longitudinal est de préférence réduit à zéro, le véhicule est en particulier stoppé quand la différence entre la valeur Soll du paramètre de mouvement transversal et la valeur Ist du paramètre de mouvement transversal dépasse une valeur prédéterminée et/ou la valeur Soll du paramètre de mouvement transversal dépasse une plage de valeur prédéterminée, en particulier un montant d'angle de braquage maximal du véhicule.

**17.** Procédé selon la revendication 16, **caractérisé en ce que**

après un arrêt du véhicule, une invitation à déplacer le véhicule dans une direction opposée à une direction longitudinale Soll spécifiée par la trajectoire Soll est émise auprès du conducteur.

**18.** Procédé selon la revendication 15 à 17, **caractérisé en ce que**

une modification du paramètre de mouvement transversal est recommandée à un conducteur par l'intermédiaire d'au moins un dispositif de signalisation, de préférence visuel, audible et/ou haptique, en particulier sous la forme d'un haut-parleur, d'un volant haptiquement actif et/ou d'au moins une indication visuelle, en particulier un sens de rotation recommandé d'un volant est signalé pour réduire la différence entre la valeur Soll du paramètre de mouvement transversal, en particulier l'angle de braquage Soll, et la valeur Ist du paramètre de mouvement transversal, en particulier l'angle de braquage Ist, et/ou une instruction pour déplacer le véhicule à l'opposé de la direction longitudinale Soll de la trajectoire Soll, en particulier après un arrêt du véhicule, est indiquée au conducteur.

**19.** Procédé selon l'une quelconque des revendications précédentes, **caractérisé en ce que**

la valeur Soll du paramètre de mouvement longitudinal est calculée au moins temporairement pendant la manoeuvre de stationnement de manière supplémentaire en fonction d'au moins une valeur maximale du paramètre de mouvement longitudinal, une accélération longitudinale maximale du véhicule, en particulier le long du trajet Soll, d'au moins une modification d'accélération longitudinale, en particulier maximale, du véhicule et/ou d'au moins une distance du véhicule par rapport à un obstacle, comme un deuxième véhicule ou un obstacle fixe, et la valeur Soll du paramètre de mouvement longitudinal, comme la vitesse longitudinale Soll, est en particulier limitée grâce à la valeur maximale du paramètre de mouvement longitudinal, en particulier grâce à une vitesse longitudinale maximale $v_{max}$.

**20.** Procédé selon l'une quelconque des revendications précédentes, **caractérisé en ce que**

le trajet Soll pendant la manoeuvre de stationnement et/ou après un arrêt du véhicule, est recalculé et/ou actualisé de préférence en évaluant des données de mesure du premier, deuxième et/ou troisième capteur.

**21.** Système de stationnement automatique pour un véhicule comprenant au moins un dispositif de commande et/ou un dispositif de régulation (100), **caractérisé en ce que**

le système de stationnement (99), en particulier le dispositif de commande et/ou régulation (100), est réglé pour la réalisation du procédé selon l'une quelconque des revendications précédentes.

**22.** Système de stationnement automatique selon la revendication 21, **caractérisé par**

au moins un capteur coopérant avec le dispositif de commande et/ou régulation (100), de préférence au moins un capteur de distance (102, 104, 106), au moins un capteur (108) pour la mesure d'au moins un paramètre de mouvement longitudinal du véhicule et/ou au moins un capteur (110) pour la mesure d'au moins un paramètre de mouvement transversal du véhicule.

**23.** Système de stationnement automatique selon la revendication 22, **caractérisé en ce que**

une distance du véhicule par rapport à au moins un objet placé d'un côté du véhicule, en particulier par rapport à un trajet Soll (1) du véhicule pendant une manoeuvre de stationnement, peut être déterminée grâce à au moins un capteur de distance latérale (102), de préférence grâce à deux à quatre capteurs de distance latérale, une distance du véhicule par rapport à au moins un objet placé dans la zone arrière du véhicule par rapport au trajet Soll (1) peut être déterminée grâce à au moins un capteur de distance arrière (104), de préférence grâce à quatre capteurs de distance arrière, et/ou une distance du véhicule par rapport à au moins un objet placé dans la zone avant du véhicule par rapport au trajet Soll (1) peut être déterminée grâce à au moins un capteur de distance avant (106), de préférence grâce à quatre à six capteurs de distance avant.

**24.** Système de stationnement automatique selon la revendication 22 ou 23, **caractérisé en ce que**
au moins un trajet Soll (1) du véhicule peut être déterminé avant et/ou pendant une manoeuvre de stationnement grâce aux valeurs de mesure du capteur de distance, au moins une valeur Soll et/ou au moins une valeur maximale du paramètre de mouvement longitudinal du véhicule et/ou au moins une valeur Soll et/ou au moins une valeur maximale du paramètre de mouvement transversal du véhicule, peut être déterminé en particulier grâce au dispositif de commande et/ou régulation (100).

**25.** Système de stationnement automatique selon l'une quelconque des revendications 22 à 24, **caractérisé en ce que**
le capteur de distance (102, 104, 106) détermine une distance en utilisant des ondes électromagnétiques, en particulier d'un rayonnement micro-ondes, d'un rayonnement d'ondes millimétriques, d'un rayonnement infrarouge et/ou d'un rayonnement ultrasonore et/ou comprend au moins un élément de radar, au moins un élément de lidar, au moins un élément de sonar, au moins un élément de capteur multiple et/ou au moins un dispositif de mixage photonique.

**26.** Système de stationnement automatique selon l'une quelconque des revendications 22 à 25, **caractérisé en ce que**
le capteur comporte, en vue de la mesure du paramètre de mouvement longitudinal, au moins un odomètre et/ou au moins un capteur de vitesse de rotation de roue, de préférence au moins un capteur de vitesse de rotation de roue magnétostatique actif, en particulier inclus dans un système ABS et/ou un système ESP du véhicule.

**27.** Système de stationnement automatique selon l'une quelconque des revendications 22 à 26, **caractérisé en ce que**
le capteur (110) comprend, en vue de la mesure du paramètre de mouvement transversal, au moins un capteur de pignon ou de colonne de direction coopérant avec un système de braquage du véhicule, de préférence un volant, une colonne de direction et/ou une tringle de direction du véhicule, le capteur (110) destiné à mesurer le paramètre de mouvement transversal comprenant de préférence au moins un capteur magnétique et/ou faisant partie d'un système ABS et/ou un système ESP du véhicule.

**28.** Système de stationnement automatique selon l'une quelconque des revendications 21 à 27, **caractérisé par**
au moins un actionneur (120, 122, 124) pour influencer le paramètre de mouvement longitudinal et/ou le paramètre de mouvement transversal du véhicule, le paramètre de mouvement longitudinal pouvant être commandé et/ou régulé en particulier grâce à l'actionneur (120, 122, 124), de préférence jusqu'à une valeur Soll, et/ou le paramètre de mouvement transversal pouvant être commandé et/ou régulé, de préférence jusqu'à une valeur Soll.

**29.** Système de stationnement automatique selon la revendication 28, **caractérisé en ce que**
au moins un angle de braquage du véhicule peut être influencé grâce à au moins un actionneur de braquage (120), l'actionneur de braquage (120) comportant de préférence au moins un ajusteur de moment, en particulier de manière intégrée dans le système de braquage du véhicule en tant que fonction inhérente d'une assistance, de préférence électromécanique, au braquage, et/ou de manière intégrée en tant qu'ajusteur externe de moment, comme un moteur séparé, dans un système d'assistance, de préférence hydraulique, au braquage, et/ou comportant au moins un ajusteur de superposition d'angle, qui collabore avec le système de braquage du véhicule en particulier grâce à au moins un engrenage, comme un engrenage planétaire ou un démultiplicateur harmonique.

**30.** Système de stationnement automatique selon la revendication 28 ou 29, **caractérisé en ce que**
le paramètre de mouvement longitudinal, de préférence au moins une vitesse longitudinale du véhicule peut être influencée grâce à au moins un actionneur de frein (122), l'actionneur de frein (122) comprenant de préférence au moins un frein électrohydraulique et/ou électromécanique et/ou un amplificateur de force de freinage pouvant être commandé de manière électronique et/ou peut être mis en prise dans une commande de frein, de préférence électrohydraulique, d'un système ESP et/ou d'un système ABS du véhicule par l'intermédiaire de l'actionneur de frein (122).

**31.** Système de stationnement automatique selon l'une quelconque des revendications 28 à 30, **caractérisé en ce que**

l'actionneur comprend au moins une commande d'entraînement (124) pour influencer la puissance motrice d'au moins un ensemble moteur du véhicule, comme un moteur à explosion.

32. Système de stationnement automatique selon l'une quelconque des revendications 21 à 31, **caractérisé par** au moins un dispositif de mémorisation (114) collaborant avec le dispositif de commande et/ou régulation (100), de préférence au moins un trajet Soll (1), au moins une valeur Soll du paramètre de mouvement longitudinal et/ou au moins une valeur Soll du paramètre de mouvement transversal pouvant être mémorisé(e)s grâce au dispositif de mémorisation (114).

33. Système de stationnement automatique selon l'une quelconque des revendications 21 à 32, **caractérisé par** au moins un dispositif d'entrée (112) collaborant avec le dispositif de commande et/ou régulation (100), de préférence au moins un trajet Soll (1), au moins une valeur Soll du paramètre de mouvement longitudinal et/ou au moins une valeur Soll du paramètre de mouvement transversal pouvant être entré dans le système de stationnement (99) grâce au dispositif d'entrée (112), et/ou le dispositif d'entrée (112) comprenant au moins une touche indépendante, au moins un contacteur rotatif, au moins un clavier, au moins un dispositif d'entrée vocale et/ou au moins un écran tactile.

34. Système de stationnement automatique selon l'une quelconque des revendications 21 à 33, **caractérisé par** au moins un dispositif de signalisation (126) collaborant avec le dispositif de commande et/ou régulation (120), des instructions visuelles, haptiques et/ou audibles pour l'ajustement d'au moins un paramètre de mouvement transversal pouvant être signalées au conducteur du véhicule de préférence grâce au dispositif de signalisation (126) et/ou le dispositif de signalisation comprenant au moins un affichage, au moins un vibrateur de siège, au moins une pédale haptiquement active et/ou au moins un haut-parleur.

Fig. 1

Fig. 2

Fig. 3

102 — Seitenabstands-sensor

104 — Heckabstands-sensor

106 — Frontabstands-sensor

108 — Längsbewegungs-parametersensor

110 — Querbewegungs-parametersensor

Eingabe-einrichtung — 112

100

Steuer- und/oder Regeleinrichtung

99

ⁱLenkaktor — 120

Bremsaktor — 122

Antriebssteuerung — 124

Signal-einrichtung — 126

114 — Speicher-einrichtung

# Fig. 4

## IN DER BESCHREIBUNG AUFGEFÜHRTE DOKUMENTE

### In der Beschreibung aufgeführte Patentdokumente

- US 5742141 A
- US 20030182038 A1
- US 5661650 A
- JP 2001138941 A
- DE 10220426 A1
- WO 2004007232 A1
- DE 20105340 U1